# EUROPEAN PATENT APPLICATION

(11) **EP 0 593 013 A2**
(43) Date of publication of application: **20.04.1994**
(21) Application number: 93116497.4
(22) Date of filing: 12.10.1993
(51) Int. Cl.: H04N 7/13

(54) **Coding apparatus**

(30) Priority: 12.10.1992 JP 273043/92
(71) Applicant: KABUSHIKI KAISHA TOSHIBA, Kawasaki-shi, Kanagawa-ken 210 (JP)
(72) Inventor: Abe, Shuji, Kureare Toshiba motosumiyoshi 306, Nakahara-ku, Kawasaki-shi, Kanagawa-ken (JP); Kimura, Junko, Yokohama-shi, Kanagawa-ken (JP)
(74) Representative: Lehn, Werner, Dipl.-Ing.

(57) **Abstract**

A coding apparatus for digital video signals employing orthogonal transformation means followed by hierarchical coding is provided with means to affect the output data rate by altering/adapting the amounts of the transform coefficients in the respective layers.

In a first embodiment, the types of layers are: DC, 4x4, 8x8.

In a second embodiment, the amount of code is adaptively allocated to the respective layers.

In a third embodiment, the quantization coefficients are reexaminated in order to control a "final" quantizer.

In a fourth embodiment, the motion vector decides on the types of layers: either 2x2, 4x4, 8x8 or DC, 4x4, 8x8.

In a fifth embodiment, the motion vector undergoes hierarchical processing as well.

## Description

### BACKGROUND OF THE INVENTION

### 1. Field of the Invention

The present invention relates to a coding apparatus for hierarchizing an image signal to code the same.

### 2. Related Art And Prior Art Statement

In recent years, digital compression of an image has been considered. Particularly, regarding high-efficiency coding which uses a DCT (discrete cosine conversion), various kinds of standardizations have been proposed. A high-efficiency coding technique is that image data are coded at smaller bit rate in order to improve efficiency of digital transmission, recording and the like. The DCT processing is that a single frame is divided into a plurality of blocks (m pixels x n horizontal scanning lines), and an image signal is converted to a frequency component in the block unit, to thereby curtail or reduce redundancy in a direction of a spatial axis. In the high-efficiency coding, not only compression (intra-frame compression) due to the DCT is performed within the single frame, but also inter-frame compression is also used in which correlation between the frames is utilized to reduce the redundancy in a direction of a time axis. The inter-frame compression is that such a property that general animation images resemble well to each other at forward and rearward frames is utilized to find a difference between the forward and rearward frames, to thereby DCT-process a difference value, to further reduce the bit rate.

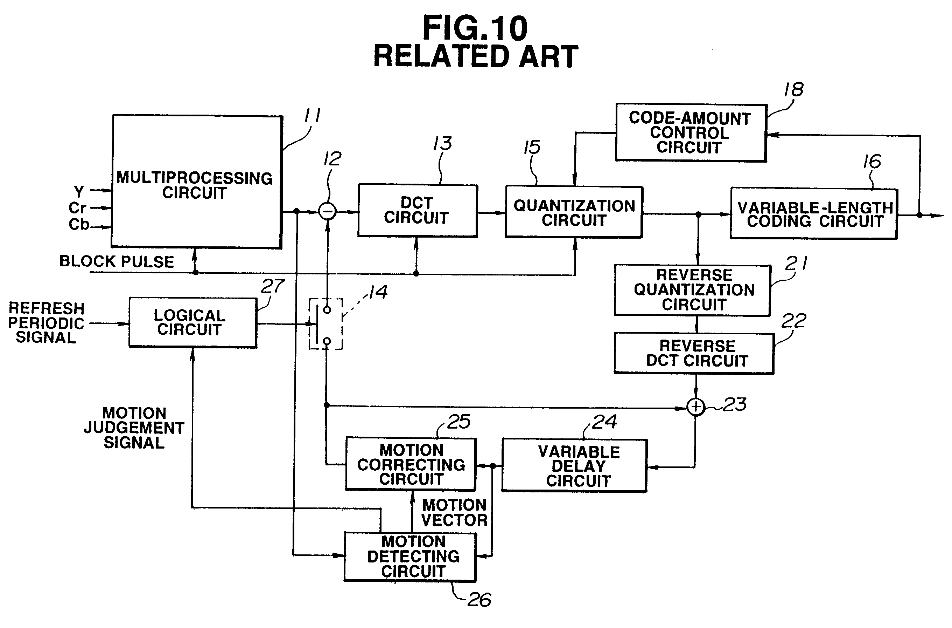

Fig. 10 is a block diagram showing a related art of a coding apparatus which uses such high-efficiency coding.

A luminance or intensity signal Y and color difference signals Cr and Cb are given to a multiprocessing circuit 11, and are multiplied by a block unit of m pixels x n horizontal scanning lines. For example, regarding the color difference signals Cr and Cb, a sampling rate in a horizontal direction is brought to 1/2 of the intensity signal Y. In this case, the color difference signals Cr and Cb are sampled in a single block of m x n during a period of time in which two (2) intensity blocks of m x n are sampled. The multiprocessing circuit 11 forms a macroblock by four (4) blocks including two (2) intensity blocks Y and one of each of the color difference blocks Cr and Cb. In this connection, two (2) intensity blocks Y and one of each of the color difference blocks Cr and Cb express the same position on the image. An output from the multiprocessing circuit 11 is given to a DCT circuit 13 through a subtracter 12.

In a case where intra-frame compression is performed, a switch 14 is turned OFF to be described subsequently. The output from the multiprocessing circuit 11 is inputted to the DCT circuit 13 as it is. A signal in which a single block is formed by m x n pixels is inputted to the DCT circuit 13. The DCT circuit 13 converts the input signal to a frequency component by two-dimensional DCT (discrete cosine conversion) processing of m x n. Thus, a spatial correlation component can be deleted. Specifically, the output (conversion coefficient) from the DCT circuit 13 is given to a quantization circuit 15. The quantization circuit 15 re-quantizes the conversion coefficient by a predetermined quantization coefficient, to thereby reduce redundancy of a signal of a single block. In this connection, block pulses are supplied to the multiprocessing circuit 11, the DCT circuit 13, the quantization circuit 15 and the like which operate in a block unit.

Quantization data from the quantization circuit 15 are given to a variable-length coding circuit 16, and are Hafman-coded, for example, on the basis of the result calculated or computed from a statistical amount of coding of the quantization output. Thus, a short bit is allocated to data which are high in occurrence probability, while a long bit is allocated to data which are low in occurrence probability, to thereby further reduce an amount of transmission. In this manner, there can be produced a coding output which is compressed in intra-frame, from the variable-length coding circuit 16.

The output from the variable-length coding circuit 16 is given also to a coding-amount control circuit 18. An amount of data of the output data varies largely depending upon an inputted image. In view of this, the code-amount control circuit 18 monitors an amount of output data from the variable-length coding circuit 16, and controls the quantization coefficient of the quantization circuit 15, to regulate the amount of output data. Further, there is also a case where the code-amount control circuit 18 controls the variable-length coding circuit 16 to control or limit the amount of output data.

Meanwhile, in a case where the switch 14 is turned ON, a signal of the present or reference frame from the multiprocessing circuit 11 is subtracted from data of the previous frame which is compensated for motion to be described subsequently in the subtracter 12, and is given to the DCT circuit 13. Specifically, in this case, the inter-frame coding is performed which utilizes redundancy of the image between the frames to code difference data. In the inter-frame coding, if a difference between the previous frame and the reference frame is merely found, the difference increases in a case where there is motion in the image. In view of this, the arrangement is such that a position of the previous frame corresponding to a predetermined position of the reference frame is found to detect the motion vector, and a difference is found at a pixel position corresponding to the motion vector to thereby perform motion compensation to reduce a difference value.

Specifically, an output from the quantization circuit 15 is given also to a reverse quantization circuit 21. The quantization output is reversely quantized in the reverse quantization circuit 15. Moreover, the quantization output is reversely DCT-processed in a reverse DCT circuit 22 so as to be returned to an original image signal. In this connection, in the DCT processing, the re-quantization, the reverse quantization and the reverse DCT processing, it is impossible to reproduce perfectly the original information. A part of the information is lacking. In this case, since the output from the subtracter 12 is difference information, the output from the reverse DCT circuit 22 is also difference information. The output from the reverse DCT circuit 22 is given to an adder 23. An output from the adder 23 is fed back through a variable delay circuit 24 for delaying a signal during about a single frame period of time and a motion correcting circuit 25. The adder 23 adds difference data to data of the previous frame to reproduce data of the reference frame, to thereby output the reproduced data to the variable delay circuit 24.

The data of the previous frame from the variable delay circuit 24 and the data of the reference frame from the multiprocessing circuit 11 are given to a motion detecting circuit 26 to detect the motion vector. The motion detecting circuit 26 finds the motion vector by total-search type motion detection due to, for example, matching calculation or computation. In the total-search type motion detection, the reference frame is divided into predetermined blocks, and a search range of horizontal fifteen (15) pixels x vertical eight (8) pixels, for example, is set by each of the blocks. The matching calculation or computation is performed within a search range corresponding to the previous frame every blocks, and approximation between the patterns is computed. The block of the previous frame which gives the minimum strain or distortion within the search range is computed. A vector produced by the block of the reference frame is detected as a motion vector. The motion detection circuit 26 outputs the found motion vector to the motion correcting circuit 25.

The motion correcting circuit 25 extracts data of a corresponding block from the variable delay circuit 24 to perform correction in accordance with the motion vector. The motion correcting circuit 25 outputs the correction to the subtracter 12 through the switch 14 and outputs the correction to the adder 23 after time adjustment or regulation. Thus, the data of the previous frame compensated in motion are supplied from the motion correcting circuit 25 to the subtracter 12 through the switch 14. The subtracter 12 gives a prediction error to the DCT circuit 13. In this manner, when the switch 14 is turned ON, it becomes an inter-frame compression mode. When the switch 14 is turned OFF, it becomes an intra-frame compression mode.

Turning-ON and -OFF of the switch 14 are performed on the basis of a motion judgment signal. Specifically, the motion detection circuit 26 creates the motion judgment signal by the fact as to whether or not the dimension of the motion vector exceeds a predetermined threshold value to output the same to a logical circuit 27. The logical circuit 27 controls turning-ON and -OFF of the switch 14 by logical judgment using the motion judgment signal and a refresh periodic signal. The refresh periodic signal is a signal which indicates an inter-frame compression frame I. In a case where it is indicated by the refresh periodic signal that the frame I is inputted, the logical circuit 27 turns OFF the switch 14 regardless of the motion judgment signal. Furthermore, if it is indicated that the motion is relatively fast, and the minimum distortion due to the matching computation exceeds the threshold value by the motion judgment signal, even in a case where the frame P is inputted, the logical circuit 27 turns OFF the switch 14 to perform intra-frame compression coding in the unit of blocks. ON- and OFF-controls of the switch 14 due to the logical circuit 27 are shown in the below table 1:

**TABLE 1**

| | | |
|---|---|---|
| FRAME 1 | INTRA-FRAME COMPRESSION FRAME | SWITCH 14 OFF |
| FRAME P | MOTION VECTOR DETECTION INTER-FRAME COMPRESSION FRAME | SWITCH 14 ON |
| | MOTION VECTOR UNKNOWN INTRA-FRAME COMPRESSION FRAME | SWITCH 14 OFF |

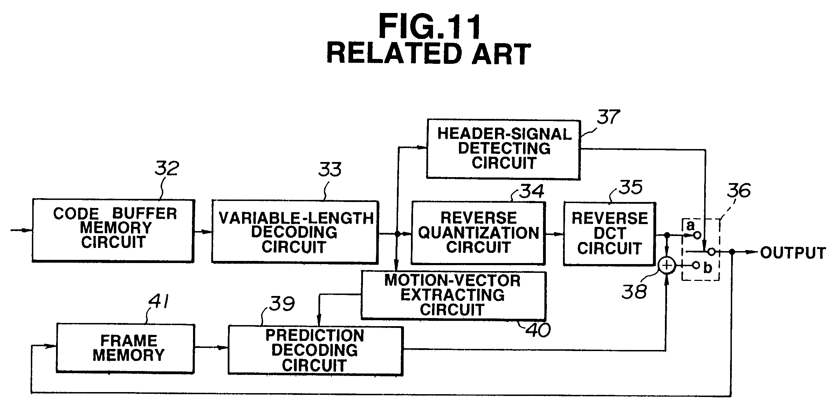

Fig. 11 is a block diagram showing a decoding unit.

On the side of decoding, the coding signal is given to a variable-length decoding circuit 33 through a code buffer memory circuit 32. The variable-length decoding circuit 33 decodes the inputted coding signal to fixed-length data. In this connection, the code buffer memory circuit 32 may be omitted.

An output from the variable-length decoding circuit 33 is reversely quantized in a reverse quantization circuit 34, and is reversely DCT-processed in a reverse DCT circuit 35 so as to be decoded into an original image signal to give the same to a terminal a of a switch 36. Meanwhile, an output from the variable-length decoding circuit 33 is given also to a header-signal extracting circuit 37. The header-signal extracting circuit 37 retrieves a header which indicates whether the inputted data are intra-frame compression data or inter-frame compression data, to output the retrieval to the switch 36. In a case where the header indicating the intra-frame compression data is given, the switch 36 selects the terminal a to output decoding data from the reverse DCT circuit 35.

The inter-frame compression data are produced by addition of the output from the reverse DCT circuit 35 and the output of the previous frame from a prediction decoding circuit 39 by an adder 38. Specifically, the output from the variable-length decoding circuit 33 is given to a motion-vector extracting circuit 40 to find a motion vector. The motion vector is given to the prediction decoding circuit 39. Meanwhile, the decoding output from the switch 36 is delayed in a single frame period of time by a frame memory 41. The prediction decoding circuit 39 compensates in motion for the decoding data of the previous frame from the frame memory 41 by the motion vector and outputs the same to the adder 38. The adder 38 adds the output from the prediction decoding circuit 39 and the output from the reverse DCT circuit 35 to each other to thereby decode the data compressed in inter-frame to output the same to a terminal b of the switch 36. When the inter-frame compression data are inputted, the switch 36 selects the terminal b by the header to output the decoding data from the adder 38. In this manner, compression and extension operations are performed without delay by both modes including the intra-frame compression and the inter-frame compression.

By the way, as described previously, the DCT circuit 13 orthogonally transforms the input signal by the two-dimensional DCT processing to output the conversion coefficient. The conversion coefficients from the DCT circuit 13 are successively arranged from the horizontal and vertical low-frequency component to high-frequency component. For example, if processing is performed in the unit of blocks of 8 x 8 pixels, sixty-four (64) conversion coefficients of 8 x 8 are generated which are arranged successively from the low range toward the high range horizontally and vertically. The conversion coefficients have a single DC coefficient and sixty-three (63) AC coefficients which indicate a mean value of all the data, and are scanned in zig-zag in the order from the horizontal and vertical low ranges toward the high range, that is, from the DC coefficients and are read out.

In a case of a relatively coarse pattern, a value of a high-range component of the conversion coefficients is small so that a quantization output from the high-range component becomes 0 (zero). Specifically, even if only the low range of the conversion coefficients is transmitted, it is possible to reproduce a rough or general image. By transmission of the high-range component, it is possible to reproduce a fine or detailed image. Furthermore, in a case where the conversion coefficients are reversely converted, there can be produced reproduced images of the number of pixels in accordance with the number of conversion coefficients. Specifically, if only the low range of the conversion coefficients is reversely converted, the reproduced images of the respective blocks become reduced images in accordance with the number of conversion coefficients. Accordingly, in consideration of a case where it is impossible to set a sufficient transmitting rate, a case where only a part of the bit stream is used for reproduction like a special reproduction in a VTR, a case where a part of the bit stream is used to perform small-image-plane display, or the like, there is a way to use a method of hierarchizing the conversion coefficients to quantize the same.

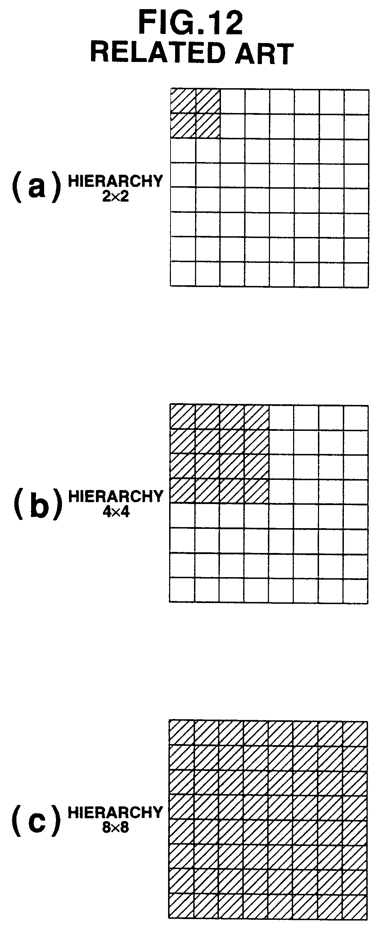

Figs. 12(a), 12(b) and 12(c) are explanatory views for describing the hierarchization. Fig. 12(a) shows hierarchy (hereinafter referred to as "hierarchy 2 x 2") which codes a portion (a diagonal portion) of 2 x 2 of the low range of each of the blocks, and Fig. 12(b) shows hierarchy (hereinafter referred to as "hierarchy 4 x 4") which codes a portion (a diagonal portion) of 4 x 4 of the low range of each of the blocks, while Fig. 12(c) shows hierarchy (hereinafter referred to as "hierarchy 8 x 8") which codes a portion (a diagonal portion) of 8 x 8 of the entire range of each of the blocks.

In the hierarchy 2 x 2, as shown by the diagonal in Fig. 12(a), the conversion coefficient of 2 x 2 in the low range is used which includes the DC coefficient of the coefficients of 8 x 8. These four (4) conversion coefficients are quantized and, further, are coded in variable length so as to be outputted. In the hierarchy 4 x 4, quantization is performed up to the conversion coefficient of 4 x 4 of the low range to code, in variable length, the conversion coefficient, to thereby be outputted together with the coding output of hierarchy 2 x 2. Similarly, in the hierarchy 8 x 8, the conversion coefficients of the entire areas or total regions are quantized and are coded in variable length, and are outputted together with the coding output of the hierarchy 2 x 2 and the hierarchy 4 x 4. For example, in accordance with the transmitting rate, it is decided whether transmission is made up to the hierarchy 2 x 2, whether transmission is made up to the hierarchy 4 x 4 or whether transmission is made up to the hierarchy 8 x 8.

Meanwhile, on the side of decoding, it is possible to reproduce the image with details in accordance with the fact up to what hierarchies the image is decoded. For example, in a case where the coding output of the hierarchy 2 x 2 is decoded, it is possible to reproduce a relatively coarse image. In a case where it is used for decoding up to the decoding output of the hierarchy 8 x 8, it is possible to reproduce a detailed or fine image.

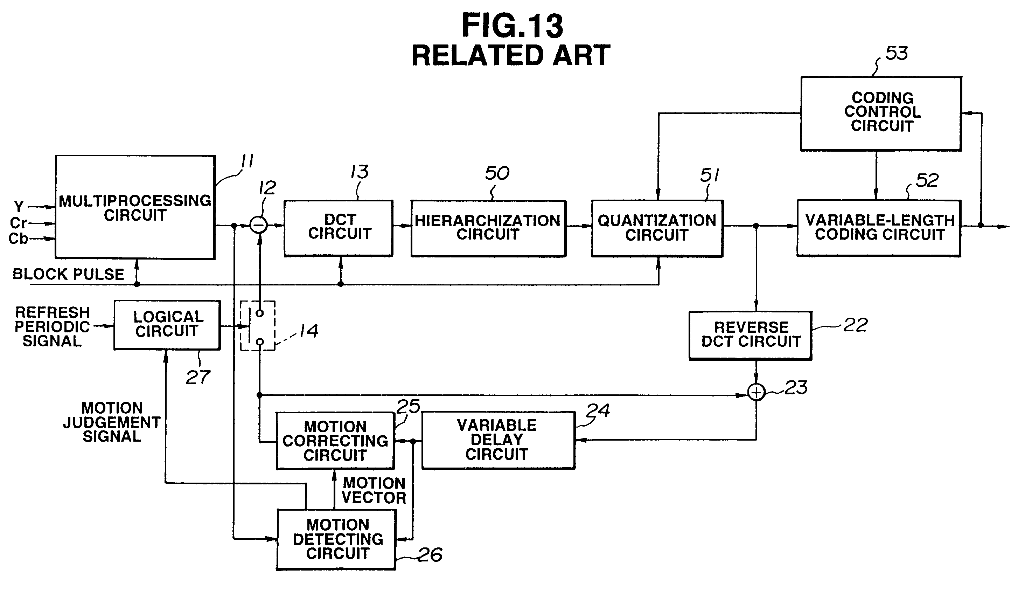

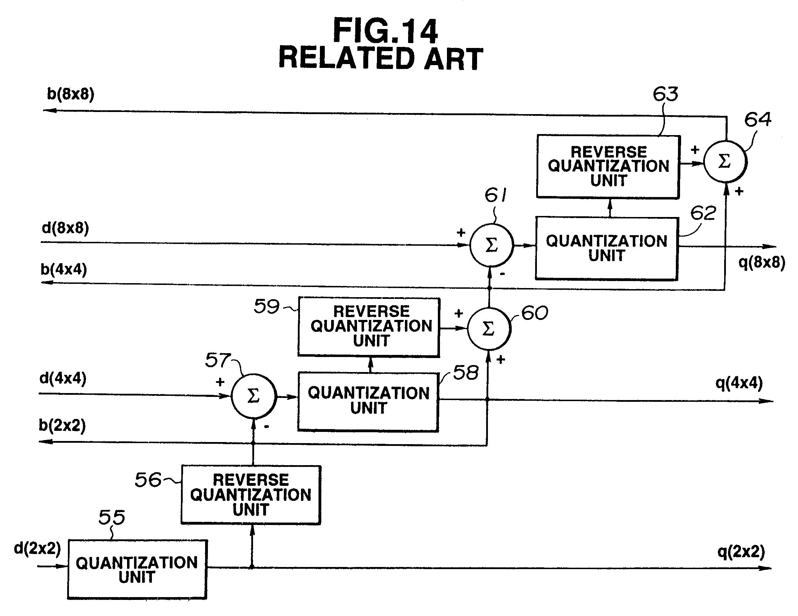

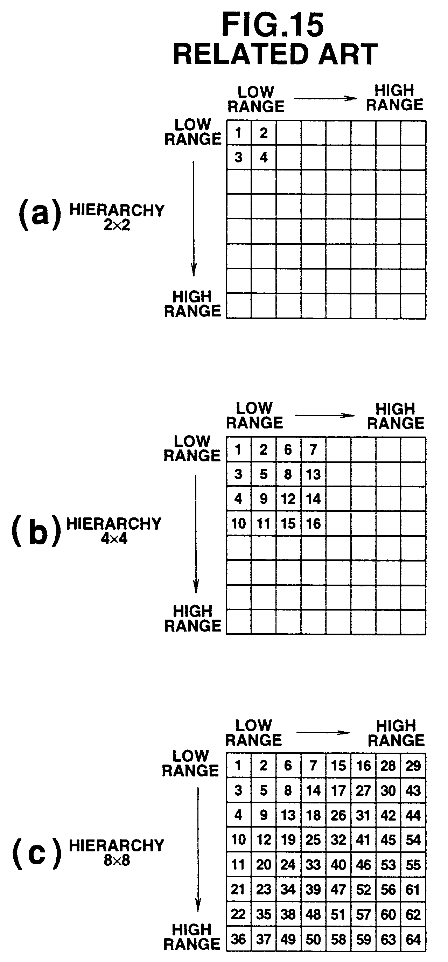

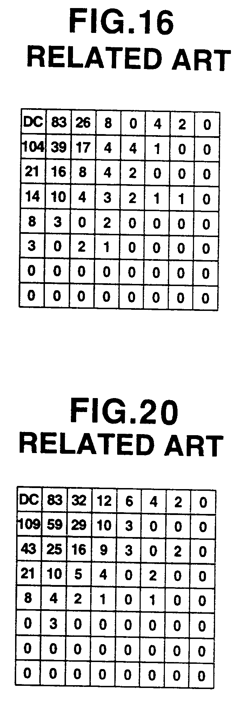

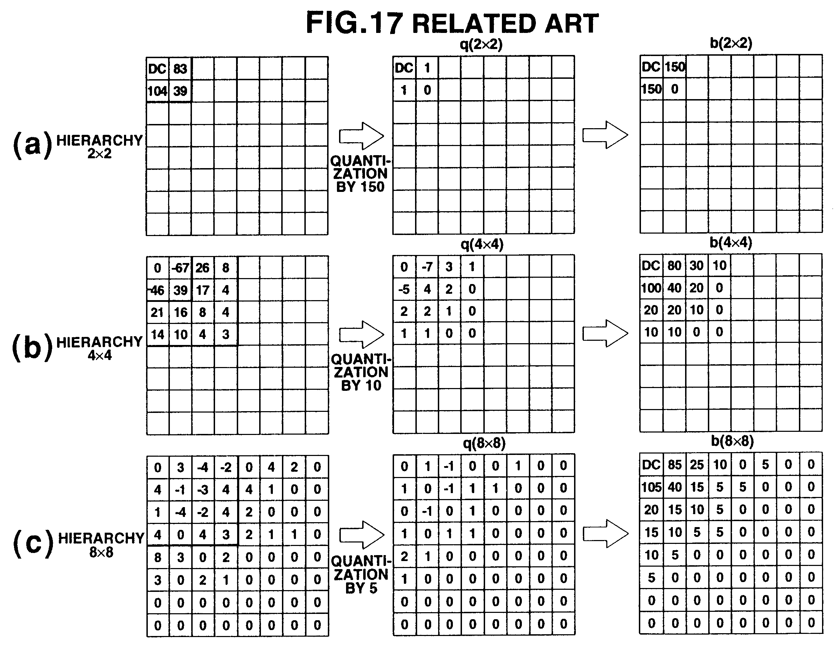

Fig. 13 is a block diagram showing a related art of a coding apparatus in which coding is hierarchized in this manner. Fig. 14 is a block diagram showing a specific arrangement of the quantization circuit in Fig. 13. Moreover, Figs. 15(a), 15(b) and 15(c) are explanatory views showing an example of zig-zag scanning every hierarchies. Figs. 16 and 17(a), 17(b) and 17(c) are explanatory views for describing coding every hierarchies.

The coding apparatus illustrated in Fig. 13 gives an output from a DCT circuit 13 to a hierarchization circuit 50. An output from the hierarchization circuit 50 is given to a quantization circuit 51. The quantization circuit 51 subtracts a conversion coefficient, for example, by a predetermined quantization coefficient, to thereby produce a quantization output to output the same to a variable-length coding circuit 52. Furthermore, the quantization circuit 51 finds also a reverse quantization output of a quantization output to output the same to a reverse DCT circuit 22. The coding output from the variable-length coding circuit 52 is given to a coding control circuit 53. The coding control circuit 53 controls the quantization coefficient of the quantization circuit 51 on the basis of a coding amount of the coding output and controls the variable-length coding circuit 52 to suppress the total or sum code amount to a value within a set code amount.

Now, it is assumed that the DCT circuit 13 performs two-dimensional DCT conversion in a block unit of 8 x 8 pixels. Sixty-four (64) conversion coefficients from the DCT circuit 13 are given to the hierarchization circuit 50 to output the conversion coefficients every hierarchies. The hierarchization circuit 50 outputs the four (4) conversion coefficients of 2 x 2 of the low range as the conversion coefficient output d(2 x 2) of the hierarchy 2 x 2. Specifically, the hierarchization circuit 50 outputs the DC coefficient and three (3) AC coefficients. Similarly, the hierarchization circuit 50 outputs sixteen (16) conversion coefficients of the low range as the conversion coefficient output d(4 x 4) of the hierarchy 4 x 4, and outputs sixty-four (64) conversion coefficients as the conversion coefficient output d(8 x 8) of the hierarchy 8 x 8.

Now, it is assumed that the conversion coefficients from the DCT circuit 13 are those as shown in Fig. 16. The hierarchization circuit 50 gives the conversion coefficient outputs d(2 x 2), d(4 x 4) and d(8 x 8) respectively to a quantization unit 55 and subtracters 57 and 61 (Fig. 14) of the quantization circuit 51. The conversion coefficient output d(2 x 2) of the hierarchy 2 x 2 becomes that as shown in the left column in Fig. 17(a). The quantization unit 55 quantizes the conversion coefficient d(2 x 2) to output the same. For example, it is assumed that the quantization unit 55 quantizes the conversion coefficient output d(2 x 2) by 150. A quantization output q(2 x 2) from the quantization unit 55 is brought to DC, 1, 1 and 0 shown in a central column in Fig. 17(a).

The quantization circuit 51 is so arranged as to output also a reverse quantization output. A reverse quantization unit 56 quantizes, in reverse, the quantization output q(2 x 2) to output the same. Specifically, the reverse quantization unit 56 outputs a reverse quantization output b(2 x 2) (DC, 150, 150, 0) (a right-hand column in Fig. 17(a)) which 150 times the quantization output q(2 x 2). The reverse quantization output b(2 x 2) is given to the subtracter 57 and an adder 60.

In the next hierarchy 4 x 4, quantization should be performed regarding twelve (12) conversion coefficients except four (4) conversion coefficients which originally perform coding at the hierarchy 2 x 2. If doing so, however, in a case where decoding is performed at a level of the hierarchy 4 x 4, the reverse quantization output with respect to the hierarchy 2 x 2 is used regarding the coding output on the basis of the four (4) conversion coefficients of the low range. A quantization error appears in a decoding output in this hierarchy. In view of this, the arrangement is such that, regarding the four (4) conversion coefficients in the low range of the hierarchy 4 x 4, the reverse quantization output of the hierarchy 2 x 2 is used to predict an actual conversion coefficient. Specifically, the arrangement is such that, regarding the four (4) conversion coefficients of the low range, the reverse quantization output of the hierarchy 2 x 2 is used as a prediction value, and a difference between the actual conversion coefficient and the prediction value is quantized. Specifically, the reverse quantization output b(2 x 2) of the reverse quantization unit 56 is given to the subtracter 57 and is subtracted from the conversion coefficient output d(4 x 4). In this manner, a conversion coefficient indicated in the left-hand column in Fig. 17(b) is inputted to a quantization unit 58.

The quantization unit 58 quantizes the inputted conversion coefficient by, for example, ten (10) to output the quantization output q(4 x 4) indicated at the central column in Fig. 17(b) to the variable-length coding circuit 52 and a reverse quantization unit 59. The reverse quantization unit 59 multiplies ten (10) to the quantization output to output the same to the adder 60. Four (4) low-range components of the reverse quantization output from the reverse quantization unit 59 are ones in which the quantization output of a difference between the actual conversion coefficient and the reverse quantization output b(2 x 2) of the hierarchy 2 x 2 is reversely quantized. Accordingly, in order to be returned to the original conversion coefficient, the adder 60 adds the output from the reverse quantization unit 59 and the reverse quantization output b(2 x 2) to each other. In this manner, there can be produced the reverse quantization output b(4 x 4) of the hierarchy 4 x 4 (the right-hand column in Fig. 17(b)).

Also in the next hierarchy 8 x 8, in order to reduce the decoding error due to the quantization error, the subtracter 61 finds a difference between a prediction value and the conversion coefficient output d(8 x 8) of the hierarchy 8 x 8, with the reverse quantization output b(4 x 4) serving as the prediction value (the left-hand column in Fig. 17(c)). A quantization unit 62 quantizes the output from the adder 61 by five (5), and finds the quantization output q(8 x 8) indicated in the right-hand column in Fig. 17(c) to output the same to the variable-length coding circuit 52 and a reverse quantization unit 63. The reverse quantization unit 63 multiplies five (5) to the quantization output q(8 x 8) to give the reverse quantization output to an adder 64. The adder 64 adds the reverse quantization output b(4 x 4) to the reverse quantization output to correct the same, and to output the reverse quantization output b(8 x 8) of the hierarchy 8 x 8 to the reverse DCT circuit 22.

The variable-length coding circuit 52 reads out the quantization output in the order of the number in Fig. 15 every hierarchies, that is, in the order of zig-zag scanning from the low range toward the high range in the horizontal and vertical directions, to code, in variable length, the quantization output every hierarchies to output the same. For example, regarding the hierarchy 2 x 2, the variable-length coding circuit 52 reads out four (4) quantization coefficients of the quantization output b(2 x 2) in the order of the number in Fig. 15(a) to code the same. Similarly, the variable-length coding circuit 52 reads out sixteen (16) outputs of the quantization output b(4 x 4) in the order of the zig-zag scanning indicated by the number in Fig. 15(b) to code the same, in the hierarchy 4 x 4, while, in the hierarchy 8 x 8, the variable-length coding circuit 52 reads out sixty-four (64) outputs of the quantization output b(8 x 8) in the order of the number in Fig. 15(c) to code the same. In this connection, the variable-length coding circuit 52 reduces the redundancy by entropy coding such as, for example, Hafman coding, run-length coding or the like.

The run-length coding is that the coefficient read out in the order of zig-zag scanning is converted to the consecutive number of the same code, to thereby reduce the redundancy. The Hafman coding is that, for example, the number in which 0 (zero) that is the coefficient the highest in appearing frequency is consecutive (hereinafter referred to as "zero-run") and a non-zero coefficient appearing the next of 0 (zero) cooperate with each other to form a set, and a code is allocated to the set of data in accordance with the appearing frequency thereof. Specifically, in the Hafman coding, a Hafman coding table in accordance with appearing frequency of data of a set of zero-run and non-zero coefficient is used, and the higher the appearing frequency, conversion is made to a code short in coding amount. Accordingly, in the Hafman coding, the larger the zero-run, the number of code words is reduced, and coding at high efficiency is performed.

The coding control circuit 53 finds a code amount of the coding output from the variable-length coding circuit 52 every hierarchies. The coding control circuit 53 accumulates the generated code amount every hierarchies. In consideration of the set code amount and the generated code amount allocated to the hierarchies, the coding control circuit 53 determines or decides quantization widths of the respective hierarchies. Thus, the quantization coefficient set every hierarchies is given to the quantization units 55, 58 and 62 of the quantization circuit 51, and the code amount is controlled every hierarchies.

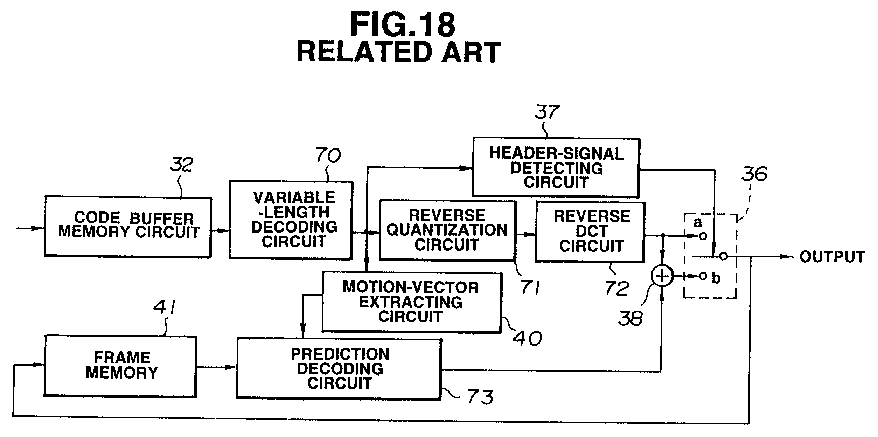

Fig. 18 is a block diagram showing a decoding unit which decodes the coding output which is coded in a manner of hierarchy.

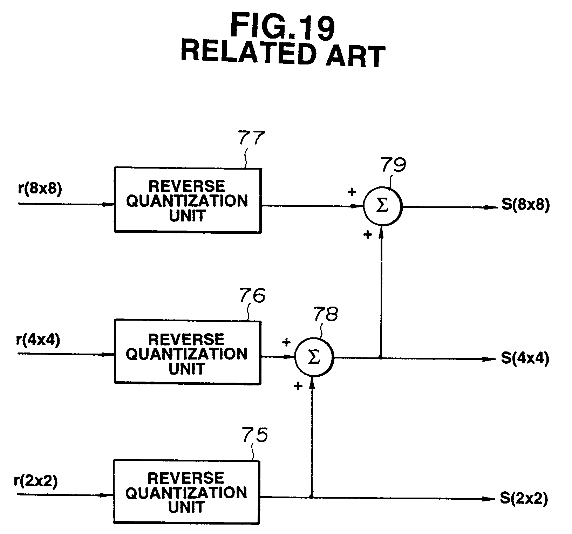

The coding output which is inputted through a code buffer memory circuit 32 is given to a variable-length decoding circuit 70. The variable-length decoding circuit 70 decodes, in variable length, the coding outputs every hierarchies. The variable-length decoding output is given to a reverse quantization circuit 71 under the original matrix scanning. The reverse quantization circuit 71 reversely quantizes the variable-length decoding output to reversely hierarchize the same. Fig. 19 is a block diagram showing a specific arrangement of the reverse quantization circuit 71.

The variable-length decoding outputs r(2 x 2), r(4 x 4) and r(8 x 8) every hierarchies from the variable-length decoding circuit 70 are given respectively to reverse quantization units 75, 76 and 77 of the reverse quantization circuit 71. The reverse quantization unit 75 reversely quantizes the decoding output r(2 x 2). Thus, there can be produced the reverse quantization output s(2 x 2) which corresponds to the reverse quantization output b(2 x 2) of the hierarchy 2 x 2 on the side of coding. The reverse quantization output s(2 x 2) from the reverse quantization unit 75 is outputted to an adder 78. The variable-length decoding output r(4 x 4) of the hierarchy 4 x 4 is reversely quantized by the reverse quantization unit 76. The reverse quantization output s(2 x 2) of the hierarchy 2 x 2 is added to the reverse quantization output from the reverse quantization unit 76, whereby there is produced a reverse quantization output s(4 x 4) of the hierarchy 4 x 4 corresponding to the reverse quantization output b(4 x 4) on the side of decoding. The reverse quantization output s(4 x 4) is given to an adder 79. Moreover, the variable-length decoding signal r(8 x 8) of the hierarchy 8 x 8 is given to the reverse quantization unit 77 so as to be reversely quantized. The reverse quantization unit 77 and the reverse quantization output s(4 x 4) of the hierarchy 4 x 4 are added to each other by the adder 79, so that there is produced the reverse quantization output s(8 x 8) of the hierarchy 8 x 8 corresponding to the reverse quantization output b(8 x 8) on the side of transmission. Any one of the reverse quantization outputs s(2 x 2), s(4 x 4) and s(8 x 8) is given to a reverse DCT circuit 72, in accordance with the hierarchy transmitted, and in accordance with the hierarchy which is intended to be displayed.

The reverse DCT circuit 72 processes, in reverse DCT, the inputted reverse quantization output and returns the same to the original data, to give the same to a terminal a of a switch 36. In a case where the reverse DCT circuit 72 processes, in reverse DCT, the reverse quantization output of the hierarchy 2 x 2 or the hierarchy 4 x 4, an AC component of the high range having no effective data is processed as 0 (zero). In this connection, in a case where the reverse DCT circuit 72 uses the inputted coding output to small-image-plane display, the reverse DCT circuit 72 performs the DCT processing on the basis of the dimension of the image planes corresponding respectively to the hierarchies. Furthermore, in this case, a prediction decoding circuit 73 performs prediction decoding in accordance with the image-plane size displayed.

By the way, as described previously, the coding control circuit 53 decides the quantization widths every hierarchies so as to be contented within the code amount set every hierarchies. Accordingly, it is also possible that, for example, the setting rate of the hierarchy 2 x 2 that is the first layer is set lower than the other hierarchies in view of restriction of a transmitting path. Meanwhile, in coding of the hierarchy 2 x 2, decoding cannot be performed even if additional information and motion information are not transmitted in addition to image information of the DC component and the AC component. In a case where the setting rate of the hierarchy 2 x 2 cannot be taken large sufficiently, there may be a case where the code amounts of these additional information, motion information and the like approach the setting rate. For example, in a case where the code amount of the motion information is relatively large, or the like, there is no room to transmit the image information so that the rate control is made difficult. In this case, if the quantization width increases in order to suppress the code amount within the setting rate, it is almost impossible to transmit the AC component.

Also in this case, for a value large in the AC coefficient of the low range of the conversion coefficient, that is, for the image in which the power of the AC coefficient is large as compared with the power of the general image, the quantization output does not become 0 (zero) even if the quantization width is large so that the AC component is transmitted. In this case, the quantization output of the AC coefficient transmitted by the first layer is extremely large in quantization error. For this reason, at a lower layer subsequent to the first layer (the hierarchy on the side of the high range), a difference of the low-range coefficient increases so that coding efficiency is deteriorated, in spite of the fact that the low-range coefficient has already been coded at the first layer.

The problem will hereunder be described by an example illustrated in Figs. 17(a), 17(b) and 17(c).

It is assumed that the quantization coefficient is limited to a value of 1 to 150. Now, it is assumed that the setting rate of the hierarchy 2 x 2 that is the first layer is near the number of transmitting bits of the information other than the image information, and the quantization width of the hierarchy 2 x 2 is 150 of the maximum value as shown in Fig. 17(a). The quantization output is given to the variable-length coding circuit 52, and data of the combination of the zero-run and the non-zero coefficient are coded in variable length. Specifically, the code transmitted in the hierarchy 2 x 2 are three (3) including DC, 1 and 1.

In this manner, even if the quantization width increases, the AC component is transmitted, because there is a large or high power in the AC low-range coefficient. Thus, it becomes difficult to control, in rate, the first layer to the setting rate.

Further, in view of the fact that the quantization error of the reverse quantization output of the hierarchy 2 x 2 is large, the difference value used as the low-range coefficient of the hierarchy 4 x 4 becomes a relatively large value. In spite of the fact that the AC component is transmitted at the hierarchy 2 x 2, the low-range coefficient of 2 x 2 does not become 0 (zero) even if the low-range coefficient of 2 x 2 is quantized by ten (10) (central column in Fig. 17(b)). The code which is coded, in variable length, by the hierarchy 4 x 4 is {0, - 7}, {-5}, {2}, {4}, {3}, {1}, {2}, {2}, {1}, {1} and {1}. In this connection, {} indicates combination of the zero-run and the non-zero coefficient in the Hafman coding. Specifically, the low-range coefficient of 2 x 2 which has already been transmitted at the hierarchy on the side of the low range must also be transmitted again, and the coding efficiency is deteriorated in the lower layer (the hierarchy 4 x 4 and the hierarchy 8 x 8 subsequent to the first layer (hierarchy 2 x 2).

Similarly, the code coded, in variable length, in a case where the quantization coefficient is five (5) in the hierarchy 8 x 8 is {1}, {1}, {(0x2), - 1}, {0, - 1}, {- 1}, {1}, {2}, {(0x2), 1}, {0, 1}, {1}, {1}, {1}, {1}, {1} and {(0x3), 1}. In this connection, (0xn) indicates that 0 (zero) is continuous through n.

As described previously, the Hafman code allocates a single code word to the set of the zero-run and the non-zero coefficient which appears subsequently. Accordingly, the number of code words of the AC component of the hierarchy 2 x 2, the hierarchy 4 x 4 and the hierarchy 8 x 8 becomes two (2) code words, eleven (11) code words and fifteen (15) code words, respectively. Specifically, the number of code words of the transmitted AC component is many to be two (2) code words up to the hierarchy 2 x 2, thirteen (13) code words up to the hierarchy 4 x 4 and twenty-eight (28) code words up to the hierarchy 8 x 8. Thus, it will be seen that the coding efficiency is low.

The power of the conversion coefficient of the first layer is high or large depending upon the property of the image. For this reason, as described previously, the setting code amount and the generated code amount of the first layer approach to each other so that the coding efficiency is deteriorated.
Further, in a case where the coding output on the basis of the first layer is reproduced, it is unnecessary to transmit the motion vector corresponding to the entire region. However, in consideration of the fact that the coding output on the basis of the hierarchy other than the first layer is reproduced, the entire information of the unnecessary motion vector is transmitted at the first layer. Thus, there is also a problem that the coding efficiency is low.

By the way, conversely, depending upon setting, there is a case where a sufficient code amount is given to the first layer. In also this case, it is not limited that the setting rate up to the hierarchy subsequent to the first layer is sufficiently large or high, but there is a case where the quantization width of the lower layer must increase extremely. Then, it is impossible to sufficiently transmit the information of the coefficient of the hierarchy on the side of the high range which is not coded in the hierarchy on the side of the low range, so that it is impossible to produce a sufficient image quality in the hierarchy on the side of the high range. On the contrary, a sufficient code amount is given to the hierarchy on the side of the low range (low-range coefficient) so that a superior or satisfactory image quality is secured. Thus, the image quality becomes unbalance between the hierarchy on the side of the upper range and the hierarchy on the side of the lower range.

For example, in a case where the setting rate of the hierarchy 2 x 2 that is the first layer is sufficiently large so that the code amount capable of being used in the AC component is extremely large, the coding control circuit 53 is such that the quantization width of the hierarchy 2 x 2 is sufficiently reduced, and the low-range coefficient is coded by the sufficient code amount and is transmitted. In this case, the quantization error of the hierarchy 2 x 2 is extremely small, and a difference value of the low-range coefficient of 2 x 2 in the quantization of the hierarchy 4 x 4 becomes substantially 0 (zero). However, at the hierarchy 4 x 4, the coefficient which is not coded by the first layer must be coded by the code amount which is based on a difference between the setting rate up to the hierarchy 4 x 4 and the setting rate of the hierarchy 2 x 2. In a case where the code amount based on the rate difference is small, it is required that the quantization width increases extremely in order to suppress the coefficient which is not coded at the first layer, within the setting rate. Thus, the AC coefficient which is relatively small becomes 0 (zero) and is not transmitted.

Then, there is a case where the high-range (middle range) AC coefficient does not almost exist in the decoding output of the hierarchy 4 x 4 so that it is impossible to produce a sufficient image quality. Further, the image quality of the reproduced image becomes unbalance between the hierarchy 4 x 4 and the hierarchy 2 x 2.

In connection with the above, the same is applicable also in a case where the setting rate of the hierarchy 4 x 4 is large, and the setting rate up to the hierarchy 8 x 8 is not sufficiently large with respect to the setting rate up to the hierarchy 4 x 4. Thus, the image quality of the hierarchy 8 x 8 is deteriorated. Moreover, the image quality of the reproduced image up to the hierarchy 4 x 4 and the image quality of the reproduced image up to the hierarchy 8 x 8 become unbalance.

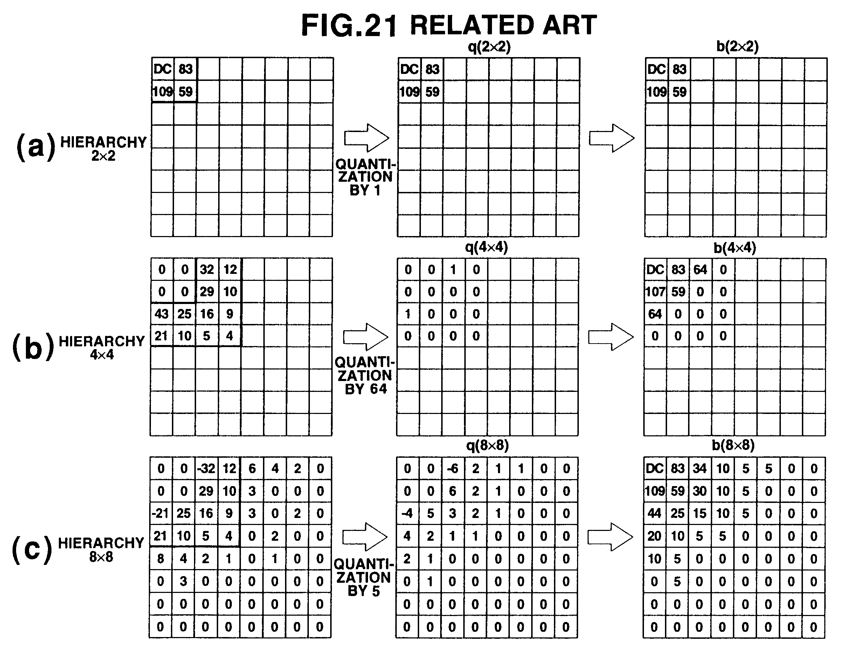

This problem will hereunder be described with reference to Fig. 20 and Figs. 21(a), 21(b) and 21(c). Figs. 21(a) to (c) correspond respectively to Figs. 17(a) to (c).

It is now assumed that the conversion coefficient illustrated in Fig. 20 is outputted from the DCT circuit 13. The hierarchization circuit 50 gives a conversion coefficient d(2 x 2) indicated on the left column in Fig. 21(a) to the quantization circuit 51. A quantization width is limited to a value between one (1) and sixty-four (64). It is assumed that a setting rate of the hierarchy 2 x 2 that is the first layer is sufficiently large so that the quantization coefficient of the hierarchy 2 x 2 is set to one (1) that is the minimum. The quantization circuit 51 quantizes the conversion coefficient by one (1) to output a quantization output indicated on the central column in Fig. 21(a). Specifically, in this case, a code transmitted is DC, {8}, {3}, {1}, {0, 9}, {5} and {9}. In this manner, operation is performed such that, in a case where the setting rate of the first layer is sufficiently large, the quantization width decreases to increase power of an AC low-range coefficient after quantization, to thereby approach the code amount to the setting rate.

In a case where a difference between the setting rate up to the hierarchy 4 x 4 and the setting rate up to the hierarchy 2 x 2 is relatively small, the quantization width in the hierarchy 4 x 4 becomes large. In Figs. 21(a), 21(b) and 21(c), the quantization width is sixty-four (64) of the maximum value. In this case, a code coded in variable length is {(0x3), 1} and {0, 1}.

In the next hierarchy 8 x 8, the quantization coefficient is five (5). In this case, the code which is coded in variable length is {(0x3), - 4}, {0, - 6}, {2}, {6}, {5}, {4}, {2}, {2}, {3}, {2}, {1}, {1}, {1}, {2}, {1}, {1}, {0x2), 1}, {0, 1} and {1}.

In this manner, in the hierarchy 2 x 2 which has a room in the setting rate, since the quantization width is small, a quantization error between the original signal and the quantization width is extremely small, as indicated on the right column in Fig. 21(a). Thus, there can be produced a superior reproduced image. On the contrary, in the hierarchy 4 x 4, since the quantization width is large, even in a case where the high-range (middle range) coefficient has great power, these quantization coefficients are not sufficiently transmitted. Accordingly, as shown in the right-hand column in Fig. 21(b), the quantization coefficients have no high-range component. As will be clear from comparison between the right-hand column in Fig. 21(b) and the right-hand column in Fig. 21(a), a difference between the reproduced image of the hierarchy 2 x 2 and the reproduced image of the hierarchy 4 x 4 is small upon reproduction. Specifically, the image qualities of the reproduced images at the respective hierarchies are not equalized to each other.

In connection with the above, in also a case where there is a sufficient room in the setting code amount at the hierarchy other than the first layer, the same is applicable. In a case where a difference between the setting code amount up to the hierarchy and the setting code amount up to the hierarchy on the high range is small, the quantization width of the hierarchy on the side of the high range increases so that the image qualities of the respective layers are not equalized to each other.

In this manner, the coding apparatus described above has the following problems. Specifically, the low rate control in the first layer becomes difficult by the setting rates of the respective layers. The coding efficiency in the hierarchy on the side of the high range is deteriorated. Moreover, the coding apparatus has a problem that an unnecessary motion vector is transmitted. Furthermore, the coding apparatus has also a problem that the image qualities of the reproduced images of the respective layers are not equalized to each other.

### OBJECTS AND SUMMARY OF THE INVENTION

It is an object of the invention to provide a coding apparatus which low-rates a first layer, which corresponds to a low-range component.

It is an another object of the invention to provide a coding apparatus which improves coding efficiency of a layer lower than a first layer.

It is an other object of the invention to provide a coding apparatus which controls transmission of a motion vector to suppress a code amount.

It is a still another other object of the invention to provide a coding apparatus which can equalize image qualities of reproduced images of respective layers to each other.

According to the invention, there is provided a coding apparatus comprising orthogonal transformation means for orthogonally transforming a digital signal to output a conversion coefficient having a direct-current component and a plurality of alternate-current components; hierarchization means for hierarchizing the conversion coefficient from said orthogonal transformation means into a plurality of hierarchies in accordance with a frequency of said conversion coefficient to successively output the hierarchized conversion coefficient from a first layer corresponding to a low-range component toward an nth layer (n is the integer equal to or more than 2) corresponding to a high-range component; transmission means for controlling, in rate, the conversion coefficients of the respective hierarchies from said hierarchization means to transmit the conversion coefficients; and rate regulating or adjusting means for inhibiting the rate control of said transmission means to control rates of the respective hierarchies on the basis of powers of the respective hierarchies.

The other features and advantages of the invention will become sufficiently apparent from the following description.

### BRIEF DESCRIPTION OF THE DRAWINGS

Fig. 1 is a block diagram showing an embodiment of a coding apparatus according to the invention;
Fig. 2 is a block diagram showing a specific arrangement of a quantization circuit in Fig. 1;
Fig. 3 is an explanatory view for describing quantization inputs of respective hierarchies in the embodiment;
Fig. 4 is an explanatory view for describing operation of the embodiment;
Fig. 5 is a block diagram showing a decoding unit;
Fig. 6 is a block diagram showing a specific arrangement of a reverse quantization circuit in Fig. 5;
Fig. 7 is a block diagram showing an another embodiment of the invention;
Fig. 8 is a block diagram showing an another embodiment of the invention;
Fig. 9 is an explanatory view for describing operation of the embodiment in Fig. 8;
Fig. 10 is a block diagram showing a related art of a coding apparatus;
Fig. 11 is a block diagram showing a decoding unit in Fig. 10;
Fig. 12 is an explanatory view for describing hierarchization;
Fig. 13 is a block diagram showing a related art of the coding apparatus;
Fig. 14 is a block diagram showing a specific arrangement of a quantization circuit in Fig. 13;
Fig. 15 is an explanatory view for describing zig-zag scanning;
Fig. 16 is an explanatory view showing an example of a conversion coefficient;
Fig. 17 is an explanatory view for describing operation of the related art;
Fig. 18 is a block diagram showing a decoding unit in Fig. 13;
Fig. 19 is a block diagram showing a specific arrangement of a reverse quantization circuit in Fig. 18;
Fig. 20 is an explanatory view showing an example of a conversion coefficient;
Fig. 21 is an explanatory view for describing operation of the related art;
Fig. 22 is a block diagram showing an another embodiment of the invention;
Fig. 23 is a block diagram showing a specific arrangement of a motion-vector degeneration circuit in Fig. 22;
Fig. 24 is a block diagram showing a motion-vector reproducing circuit on the side of decoding;
Fig. 25 is a block diagram showing a motion-vector reproducing circuit on the side of decoding; and
Fig. 26 is a block diagram showing a modification of the embodiment illustrated in Fig. 1.

### DETAILED DESCRIPTION OF THE PREFERRED EMBODIMENTS

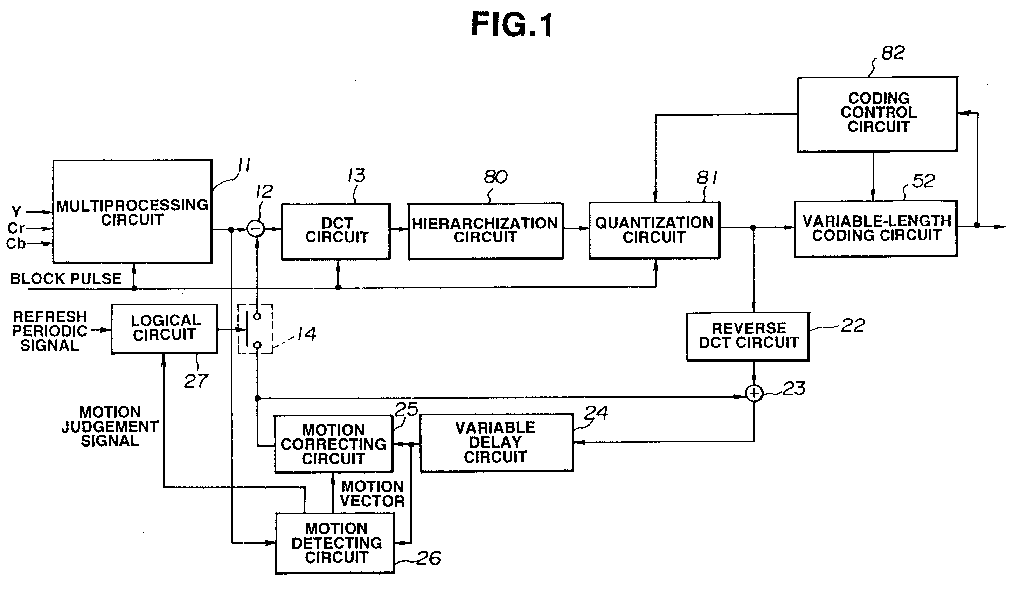

Fig. 1 is a block diagram showing an embodiment of a coding apparatus according to the invention. In Fig. 1, the same or identical reference numerals are applied to constitutional elements the same as or identical with those in Fig. 13.

An intensity signal Y and color difference signals Cr and Cb are inputted to a multiprocessing circuit 11. The multiprocessing circuit 11 multiplexes an inputted signal in a block unit of eight (8) pixels x eight (8) horizontal scanning lines, for example, and multiplexes the same in the macro block unit having two (2) intensity blocks Y and one of each of the color difference blocks Cr and Cb, to output the same to a subtracter 12. Data of a previous frame are inputted to the subtracter 12 through a switch 14. The subtracter 12 subtracts the data of the previous frame from an output of the multiprocessing circuit 11 to output the same to a DCT circuit 13 upon processing of inter-frame compression. Upon processing of intra-frame compression, the subtracter 12 outputs the output of the multiprocessing circuit 11 to the DCT circuit 13 as it is.

The DCT circuit 13 processes, in two-dimensional DCT of 8 x 8, an output from the subtracter 12 to output the same to a hierarchization circuit 80. The hierarchization circuit 80 hierarchies a conversion coefficient from the DCT circuit 13 into a first to nthe layers (n is the integer equal to or more than two (2)). For example, the hierarchization circuit 80 performs hierarchization into three (3) hierarchies including a hierarchy of 2 x 2 as a first layer, a hierarchy of 4 x 4 as a second layer and a hierarchy of 8 x 8 as a third layer. In the present embodiment, the hierarchization circuit 80 is so arranged as to bring an AC component to 0 (zero) as the hierarchy 2 x 2 to output an output d(DC) of only a DC component. Outputs of the respective hierarchies from the hierarchization circuit 80 are given to a quantization circuit 81.

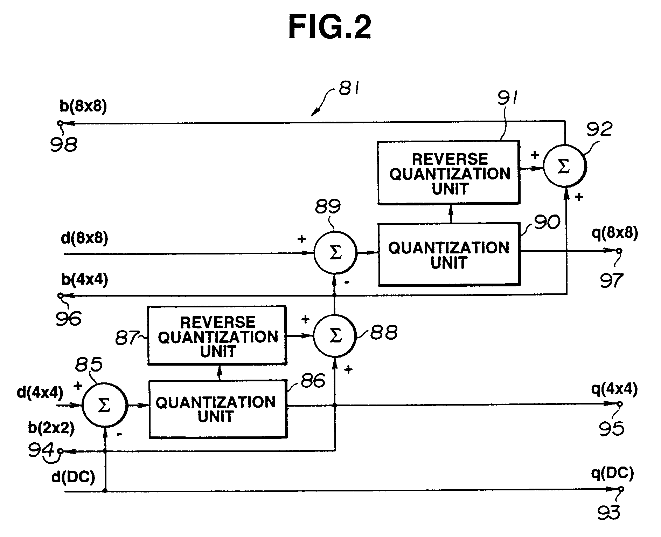

Fig. 2 is a block diagram showing a specific arrangement of the hierarchization circuit 81 in Fig. 1.

The conversion coefficients d(DC), d(4 x 4) and d(8 x 8) of the respective hierarchies are given respectively to subtracters 85, 85 and 89. The conversion coefficient d(DC) is outputted to a terminal 93 as a quantization output q(DC) of the hierarchy 2 x 2, and to a terminal 94 as a reverse quantization output b(2 x 2). The subtracter 85 subtracts the conversion coefficient of the hierarchy 2 x 2 serving as a prediction value from the conversion coefficient of the hierarchy 4 x 4, to give a difference therebetween to a quantization unit 86. The quantization unit 86 quantizes the inputted conversion coefficient of 4 x 4 to output the quantization output q(4 x 4) to a terminal 95 and a reverse quantization unit 87. The reverse quantization unit 87 reversely quantizes the quantization output q(4 x 4) to give the reverse quantization output to an adder 88. The adder 88 adds the reverse quantization output b(2 x 2) of the hierarchy 2 x 2 to the reverse quantization output to thereby correct the same, and outputs a reverse quantization output b(4 x 4) of the hierarchy 4 x 4 to a terminal 96, the subtracter 89 and an adder 92.

The subtracter 89 subtracts the reverse quantization output b(4 x 4) from a conversion coefficient output d(8 x 8) to predict the conversion coefficient of the hierarchy 8 x 8, to thereby output a prediction value to a quantization unit 90. The quantization unit 90 quantizes the conversion coefficient to output a quantization output q(8 x 8) to a terminal 97 and a reverse quantization unit 91. The reverse quantization unit 91 reversely quantizes the quantization output q(8 x 8) to give the same to the adder 92. The adder 92 adds the reverse quantization output b(4 x 4) of the hierarchy 4 x 4 to a reverse quantization output to produce the reverse quantization output b(8 x 8) of the hierarchy 8 x 8 to thereby output the same to a terminal 98.

The quantization outputs q(DC), q(4 x 4) and q(8 x 8) from the quantization circuit 81 are given to a variable-length coding circuit 52. The variable-length coding circuit 52 is controlled by a coding control circuit 82 to convert the inputted data to a variable-length code every hierarchies, to thereby further reduce the bit rate to output the same. The variable-length code from the variable-length coding circuit 52 is also given to the coding control circuit 82. The coding control circuit 82 is so arranged as to output a control signal for varying the quantization coefficient every hierarchies, to the quantization units 86 and 90 of the quantization circuit 81, on the basis of the output from the variable-length coding circuit 52. Further, the coding control circuit 82 limits the number of output bits of the variable-length coding circuit 52 to limit the total code amount. In this connection, block pulses are supplied to circuits which perform processing in a block unit, such as the multiprocessing circuit 11, the DCT circuit 13, the quantization circuit 81 and the like.

The reverse quantization output b(8 x 8) of the quantization circuit 81 is given to a reverse DCT circuit 22. The reverse DCT circuit 22 processes, in reverse DCT, the reverse quantization output, to return the same to the original data prior to the DCT processing, to thereby output the same to an adder 23. The output from the adder 23 is fed back through a motion correction circuit 25 and a variable delay circuit 24 for performing delay through a single frame period of time. The adder 23 adds difference data of the present frame and data of the previous frame to each other, to return the inputted data to the original data prior to the difference processing due to the subtracter 12 to output the same to the variable delay circuit 24. An output from the variable delay circuit 24 is given also to a motion detecting circuit 26.

An output from the multiprocessing circuit 11 is also inputted to the motion detecting circuit 26. The motion vector is found by the matching calculation or computation due to detection of, for example, a total search type motion vector so as to output the same to the motion correcting circuit 25. A motion judgment signal on the basis of whether or not a distortion value due to the matching computation exceeds a predetermined threshold value is outputted to a logical circuit 27. The motion correcting circuit 25 corrects, in motion, the output from the variable delay circuit 24, on the basis of the motion vector, and outputs the previous frame data corrected in motion to the subtracter 12 through the switch 14. The motion logical circuit 27 controls turning-on and turning-off of the switch 14 on the basis of the motion judgment signal and the refresh periodic signal which indicates the intra-frame compression frame.

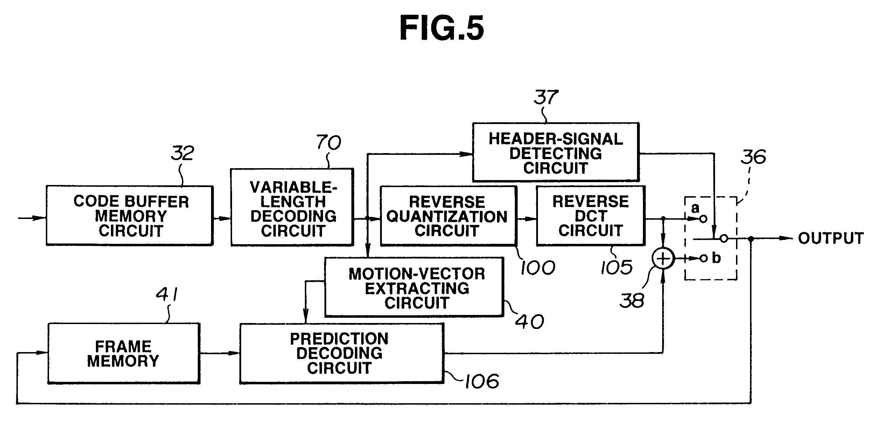

Fig. 5 is a block diagram showing the side of decoding. In Fig. 5, the same or identical reference numerals are applied to the same or identical constitutional elements as those in Fig. 18.

A coding output of the variable-length coding circuit 52 on the side of coding is given to a code buffer memory circuit 32. A coding output from the coding buffer memory circuit 32 is given to a variable-length decoding circuit 70. The variable-length decoding circuit 70 decodes, in variable length, the coding output every hierarchies 2 x 2, 4 x 4 and 8 x 8, to convert the same to fixed-length data r(DC), r(4 x 4) and r(8 x 8), respectively. An output from the variable-length decoding circuit 70 is given to a reverse quantization circuit 100, a header-signal detecting circuit 37 and a motion-vector extracting circuit 40.

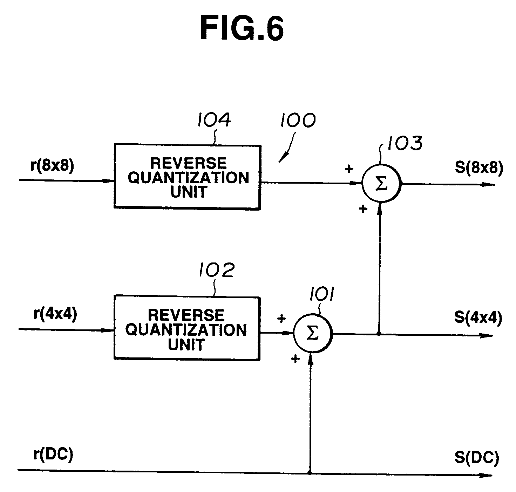

Fig. 6 is a block diagram showing a specific arrangement of the reverse quantization circuit 100 in Fig. 5.

An output r(DC) from the variable-length decoding circuit 70 is outputted as a reverse quantization output s(DC) as it is, and is given also to an adder 101. The outputs r(4 x 4) and r(8 x 8) from the variable-length decoding circuit 70 are given respectively to reverse quantization units 102 and 104. The reverse quantization unit 102 reversely quantizes the decoding output r(4 x 4) of the hierarchy 4 x 4 to give the same to the adder 101. The adder 101 adds the output from the reverse quantization unit 102 and the decoding output r(DC) of the hierarchy 2 x 2 to each other to output the same as the reverse quantization output s(4 x 4) of the hierarchy 4 x 4 and to give the same also to an adder 103. The reverse quantization unit 104 reversely quantizes the decoding output r(8 x 8) to give the same to the adder 103. The adder 103 adds the reverse quantization output and the reverse quantization output s(4 x 4) of the hierarchy 4 x 4 to each other to output the same as the reverse quantization output s(8 x 8) of the hierarchy 8 x 8.

The reverse quantization outputs of the respective hierarchies of the reverse quantization circuit 100 are given to a reverse DCT circuit 105. The reverse DCT circuit 105 processes, in reverse DCT, the reverse quantization output every hierarchies to return the same to the original code to thereby output the same to a terminal a of a switch 36 and an adder 38. The arrangement including the header-signal extracting circuit 37 for extracting the header signal, the motion-vector extracting circuit 40 for extracting the motion vector, a frame memory 41 for delaying the output signal during a single frame period of time, the adder 38 for adding the output form the reverse DCT circuit 105 and an output from a prediction decoding circuit 106 to each other to decode the inter-frame compression frame data and the switch 36 for switching the decoding data of the intra-frame compression data and the decoding data of the inter-frame compression data to output the same is similar to that of the related art in Fig. 18. The prediction decoding circuit 106 compensates, in motion, for the output from the frame memory 41 by the motion vector from the motion-vector extracting circuit 40 to give the same to the adder 38.

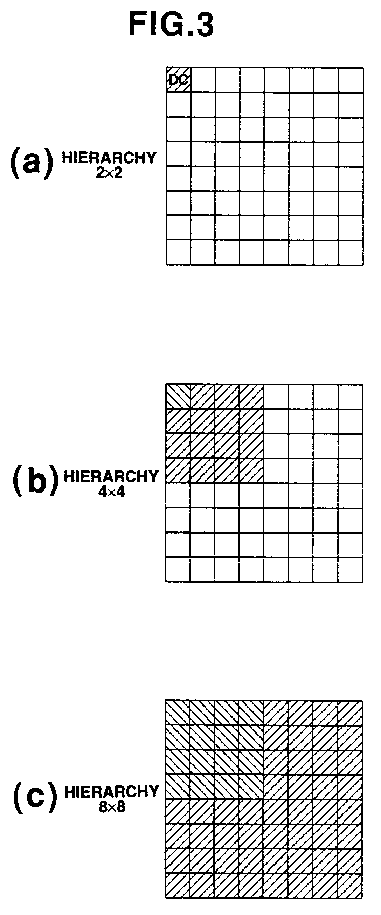

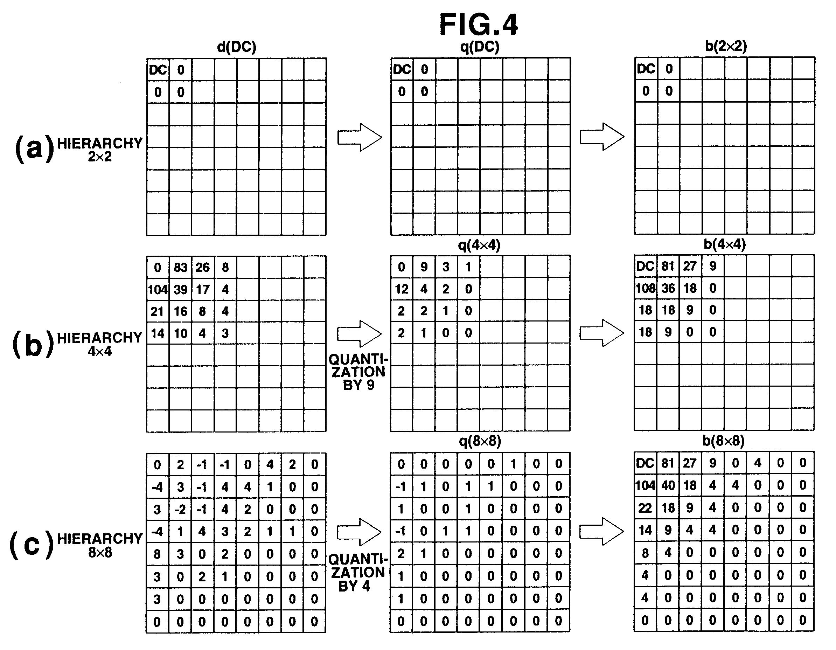

Operation of the embodiment arranged as described above will next be described with reference to Figs. 3(a) to 3(c) and Figs. 4(a) to 4(c). Figs. 3(a) to 3(c) are explanatory views showing a coefficient which performs decoding in each of the hierarchies, while Figs. 4(a) to 4(c) are explanatory views for describing operation of the embodiment. Figs. 4(a) to (c) correspond respectively to Figs. 17(a) to (c). Fig. 4(a) shows the hierarchy 2 x 2. Fig. 4(b) shows the hierarchy 4 x 4. Fig. 4(c) shows the hierarchy 8 x 8.

The intensity signal Y and the color difference signals Cr and Cb are multiplexed in a unit of blocks of the eight (8) pixels x eight (8) horizontal scanning lines by the multiprocessing circuit 11 and, further, are multiplexed in a unit of macro blocks by four (4) blocks including two (2) intensity blocks Y and a single of each of the color difference blocks Cr and Cb and are given to the subtracter 12. Upon creation of the intra-frame compression frame data, the switch 14 is turned off, and an output from the multiprocessing circuit 11 is processed, in DCT, in the DCT circuit 13 and is outputted to the hierarchization circuit 80.

Regarding the hierarchy 4 x 4 and the hierarchy 8 x 8, the hierarchization circuit 80 outputs the conversion coefficient of 4 x 4 of the low range and the conversion coefficient of 8 x 8 of the total region or area. Furthermore, the hierarchization circuit 80 uses only the DC component as the conversion coefficient of the hierarchy 2 x 2 and brings the other three (3) AC coefficients to 0 (zero) to output the same.

The conversion coefficients d(DC), d(4 x 4) and d(8 x 8) of the respective hierarchies from the hierarchization circuit 80 are given to the quantization circuit 81. The quantization circuit 81 quantizes the conversion coefficients of the respective hierarchies and reversely quantizes the same. As the conversion coefficient output of the hierarchy 2 x 2, only the DC component illustrated in a diagonal portion in Fig. 3(a) is inputted. The quantization circuit 81 outputs DC, 0, 0 and 0 as the quantization output q(DC). Further, the reverse quantization output b(2 x 2) of the hierarchy 2 x 2 is also DC, 0, 0 and 0. The quantization circuit 81 quantizes the conversion coefficient of 4 x 4 of the low range indicated by the diagonal portion in Fig. 3(b) in the hierarchy 4 x 4. Here, a DC coefficient at a left-hand diagonal portion uses a difference between the conversion coefficient from the DCT circuit 13 and the reverse quantization output (prediction value) of the hierarchy 2 x 2. The other fifteen (15) conversion coefficients use the output from the hierarchization circuit 80 indicated in the right-hand diagonal portion as it is. Moreover, in the hierarchy 8 x 8, the quantization circuit 81 uses the conversion coefficient of 8 x 8 of the total region indicated in the diagonal portion in Fig. 3(c). The left-hand diagonal portion in Fig. 3(c) indicates a conversion coefficient of a difference which uses, as the prediction value, the reverse quantization output from the hierarchy 4 x 4, while the right-hand diagonal portion indicates that an output from the hierarchization circuit 80 is used as it is.

It is now assumed that the conversion coefficient from the DCT circuit 13 is one illustrated in Fig. 16. The hierarchization circuit 80 gives DC, 0, 0 and 0 that are conversion coefficients d(DC) of 2 x 2 of the low range, to the quantization circuit 81, as shown in the left-hand column in Fig. 4(a). The quantization circuit 81 outputs the conversion coefficient as it is as the quantization output q(DC) and the reverse quantization output b(2 x 2).

Regarding the next hierarchy 4 x 4, the quantization circuit 81 performs subtraction between the conversion coefficient d(4 x 4) and the reverse quantization output b(2 x 2) (prediction value) by the subtracter 85 to find a difference therebetween. The other fifteen (15) conversion coefficients use the output from the hierarchization circuit 80 as it is. The prediction value is 0 (zero), and the fifteen (15) AC coefficients of the hierarchy 4 x 4 are an input per se. The quantization unit 86 performs quantization by the quantization coefficient nine (9), as shown in Fig. 4(b). The quantization output q(4 x 4) from the quantization unit 86 becomes one illustrated on the central column in Fig. 4(b). The quantization output is reversely quantized by the reverse quantization unit 87 and, thereafter, is added to the reverse quantization output b(2 x 2) by the adder 88. Thus, there is provided the reverse quantization output b(4 x 4) on the right-hand column in Fig. 4(b).

Regarding the next hierarchy 8 x 8, the quantization circuit 81 subtracts the reverse quantization output b(4 x 4) of the hierarchy 4 x 4 from the conversion coefficient d(8 x 8) from the hierarchization circuit 80 by the subtracter 89, to give the same to the quantization unit 90 (left-hand column in Fig. 4(c)). The quantization unit 90 performs quantization by the quantization coefficient four (4) to produce the quantization output q(8 x 8) on the central column in Fig. 4(c). Further, the quantization output q(8 x 8) is reversely quantized in the reverse quantization unit 91. The reverse quantization output and the reverse quantization output b(4 x 4) of the hierarchy 4 x 4 are added to each other in the adder 92 to produce the reverse quantization output b(8 x 8) (right-hand column in Fig. 4(c)).

The quantization outputs q(DC), q(4 x 4) and q(8 x 8) from the quantization circuit 81 are given to the variable-length coding circuit 52. The reverse quantization outputs b(2 x 2), b(4 x 4) and b(8 x 8) become the original data of the local decoding signal. Moreover, the reverse quantization output b(8 x 8) is given to the reverse DCT circuit 22 in order to create a reference image upon inter-frame compression.

The variable-length coding circuit 52 codes, in variable length, the quantization outputs from the respective hierarchies. For example, the variable-length coding circuit 52 codes, in two-dimensional Hafman, data of combination of the zero-run and the non-zero coefficient of the quantization output to output the same as coding outputs. The coding output from the variable-length coding circuit 52 is given to the coding control circuit 82. A generated code amount is counted every hierarchies. The quantization circuit 81 and the variable-length coding circuit 52 are controlled such that the generated code amount is contended within the set code amount. The set code amount is so set as to be divided into three (3) stages including "till the hierarchy 2 x 2", "till the hierarchy 4 x 4" and "till the hierarchy 8 x 8". Specifically, the coding control circuit 82 compares, at any time, the set code amount till the respective hierarchies and the generated code amount till the respective hierarchies with each other to decide the quantization width in the hierarchy 4 x 4 and the hierarchy 8 x 8, to thereby control the quantization circuit 81. Thus, the quantization coefficients of the quantization units 86 and 90 of the quantization circuit 81 are suitably set so that code-amount control of the hierarchy 4 x 4 and the hierarchy 8 x 8 is performed.

Meanwhile, the reverse quantization output from the quantization circuit 81 is fed back to the subtracter 12 through the reverse DCT circuit 22, the adder 23, the variable delay circuit 24, the motion correcting circuit 25 and the switch 14 so as to be delayed during the period of time of a single frame. Upon creation of the inter-frame compression frame data, the subtracter 12 subtracts data of the previous frame from the output from the multiprocessing circuit 12 to output a difference therebetween to the DCT circuit 13. The difference data are reduced in data rate by the DCT circuit 13 and the quantization circuit 81, and are converted to a variable-length code by the variable-length coding circuit 52. The variable-length code is outputted.

Meanwhile, on the side of decoding, the coding output is given to the variable-length decoding circuit 70 through the code buffer memory circuit 32. The variable-length decoding circuit 70 performs variable-length decoding every the hierarchies of the coding output. The variable-length decoding circuit 70 returns the zig-zag scanning to the original matrix scanning to give the same to the reverse quantization circuit 100. The reverse quantization circuit 100 reversely quantizes the variable-length decoding output to reversely hierarchize the same.

The reverse quantization circuit 100 has no AC coefficient component regarding the decoding output r(DC) of the hierarchy 2 x 2. Accordingly, the reverse quantization circuit 100 outputs the decoding output r(DC) of the hierarchy 2 x 2 as the reverse quantization output s(DC) as it is without reverse quantization. In the hierarchy 4 x 4 and the hierarchy 8 x 8, the low-range coefficient is predicted by the use of the reverse quantization output of the hierarchy 2 x 2 and the hierarchy 4 x 4 upon coding. For this reason, the decoding output r(4 x 4) of the hierarchy 4 x 4 has been reversely quantized by the reverse quantization unit 102 and, thereafter, is added to the reverse quantization output s(DC) in the adder 101, whereby the reverse quantization output s(4 x 4) is produced. Furthermore, the decoding output r(8 x 8) is reversely quantized by the reverse quantization unit 104 and, thereafter, is added to the reverse quantization output s(4 x 4) by the adder 103 to produce the reverse quantization output s(8 x 8). The reverse quantization circuit 100 outputs an output in accordance with the received hierarchy, the hierarchy intended to be displayed and the like, of the reverse quantization outputs s(DC), s(4 x 4) and s(8 x 8).

In a case where the reverse DCT circuit 105 processes, in reverse DCT, the reverse quantization output of the hierarchy 2 x 2 or the hierarchy 4 x 4, the reverse DCT circuit 105 processes the high-range AC component having no effective data as 0 (zero). For example, in the hierarchy 2 x 2, the reverse DCT circuit 100 brings three (3) AC coefficients other than the DC coefficient to 0 (zero) and handles the same as the coefficient of 2 x 2, to perform the two-dimensional reverse DCT processing of 2 x 2. Further, in a case where the reverse DCT circuit 72 uses the inputted coding output to small-image-plane display, the reverse DCT circuit 72 performs the DCT processing on the basis of the dimension of the image plane corresponding respectively to the hierarchies. Moreover, in this case, the prediction decoding circuit 106 performs prediction decoding in accordance with the displayed image plane size. Thus, the coding output which is created by the coding apparauts in Fig. 1 is decoded.

The number of code words in the respective hierarchies will next be described.

As described previously, in the hierarchy 2 x 2 that is the first layer, the AC component is not coded, but only the DC component is decoded. Specifically, even in a case where the set code amount of the first layer is a value approximate to the number of bits of the required information other than the image information and the power of the low-range AC component is large, the minimum rating of the first layer becomes possible. In this manner, the generated code amount up to the hierarchy 2 x 2 is small, while the code amount capable of being used in hierarchies subsequent to the hierarchy 4 x 4 is relatively large. Accordingly, it is possible to reduce the quantization error subsequent to the hierarchy 4 x 4, and it is possible to improve the image quality of the reproduced image on the basis of the hierarchies subsequent to the hierarchy 4 x 4.

In the present embodiment, with respect to the conversion coefficient in Fig. 16, the coding control circuit 82 is arranged such that the quantization coefficient in the hierarchy 4 x 4 is set to nine (9) which is smaller than that in Fig. 17. In the hierarchy 4 x 4, the code of the AC coefficient which is coded, in variable length, is {0. 9}, {12}, {2}, {4}, {3}. {1}, {2}, {2}, {2}, {1} and {1}. Specifically, the number of code words of the AC coefficient which is transmitted up to the hierarchy 4 x 4 is eleven (11). Furthermore, the code of the AC coefficient which is coded, in variable length, in the hierarchy 8 x 8 is {(0x2), - 1}, {1}, {1}, {(0x4), - 1}, {2}, {(0x2), 1}, {0, 1}, {1}, {1}, {1}, {1}, {1}, {1} and {(0x2), 1}. The number of code words transmitted up to the hierarchy 8 x 8 is twenty-five (25). Specifically, it is possible to reduce the number of code words only by three (3) as compared with the example in Fig. 17.

In this manner, in the present embodiment, the arrangement is such that the rate control is not performed in the first layer, but only the information required to the minimum for reproduction other than the image information on the basis of the AC coefficient is transmitted. Thus, the code amount in the first layer is restricted or suppressed to the minimum, and the number of code words transmitted in the lower layer (the hierarchy on the side of the high range) subsequent to the first layer is reduced, to improve the coding efficiency. Moreover, since the code amount capable of being used in the lower layer subsequent to the first layer increases, it is possible to set the quantization width small in these hierarchies. Thus, it is also possible to reduce the quantization error to improve the image quality of the reproduced image corresponding to the lower layer.

By the way, the arrangement is such that, upon the inter-frame compression, the motion vector which is used for motion compensation is also coded and is transmitted together with the inter-frame compression code. In this case, there is a case where the code amount of the motion vector increases remarkably as compared with the code amount of the inter-frame compression code. In view of this, it is also considered that this code amount of the motion vector is monitored to determine or decide a code transmitted by the first layer in accordance with the code amount of the motion vector.

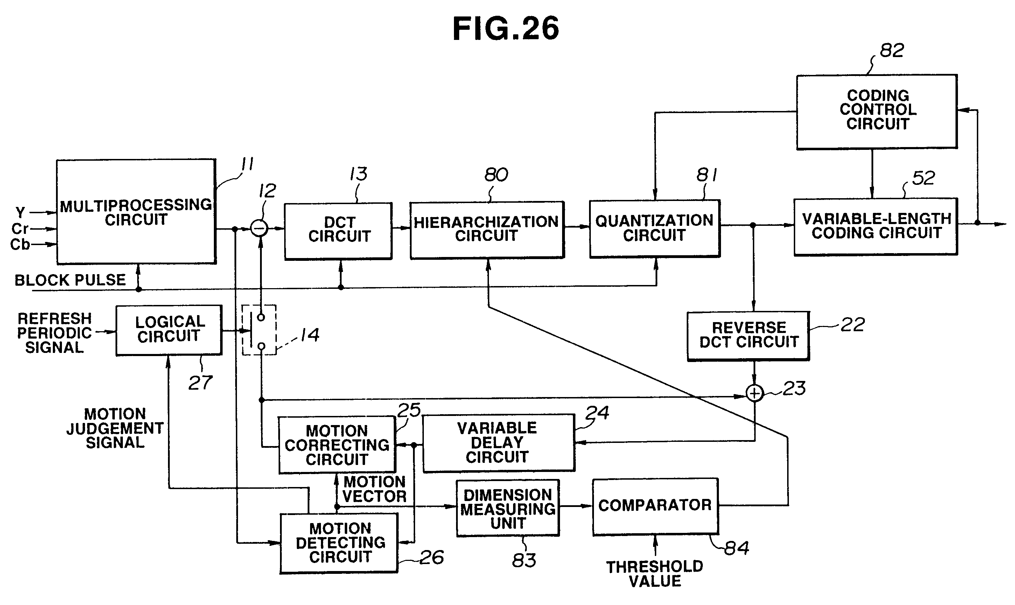

Fig. 26 is a block diagram showing a coding apparatus in which consideration is made to this point. In Fig. 26, the same or identical reference numerals are applied to constitutional elements the same as or identical with those shown in Fig. 1, and the description thereof will be omitted.

A modification illustrated in Fig. 26 is different from that shown in Fig. 1 in that a size or dimension (magnitude) measuring unit 83 and a comparator 84 are added. Specifically, a motion vector from a motion detecting circuit 26 is given to a motion correcting circuit 25, and is also given to the dimension measuring unit 83. The dimension measuring unit 83 finds a mean value of the dimension of the motion vector every frames to give the same to the comparator 84. A predetermined threshold value is also given to the comparator 84. The comparator 84 compares the threshold value and a mean value of the motion vector with each other to actuate a hierarchization circuit 80 in a case where the mean value of the motion vector is higher than the threshold value. In a case where the mean value of the motion vector is not higher than the threshold value, the comparator 84 activates the hierarchization circuit 80 similarly to the hierarchization circuit 50 illustrated in Fig. 13.

In the coding apparatus arranged in this manner, the mean value of the dimension of the motion vector is found by the dimension measuring unit 83. The comparator 84 compares the mean dimension of the motion vector and the predetermined threshold value with each other to activate the hierarchization circuit 80 in a case where the mean value of the dimension of the motion vector is higher than the threshold value to bring the alternate-current component to 0 (zero) at the hierarchy 2 x 2, to thereby output DC, 0, 0 and 0. Conversely, in a case where the mean value of the dimension of the motion vector is less than the threshold value, the hierarchization circuit 80 outputs the direct-current component and the alternate-current component of the hierarchy 2 x 2 as they are.

Thus, in a case where there is a room in the code amount of the hierarchy 2 x 2, it is possible to prevent the alternate-current component from being not transmitted so that the image quality is deteriorated.

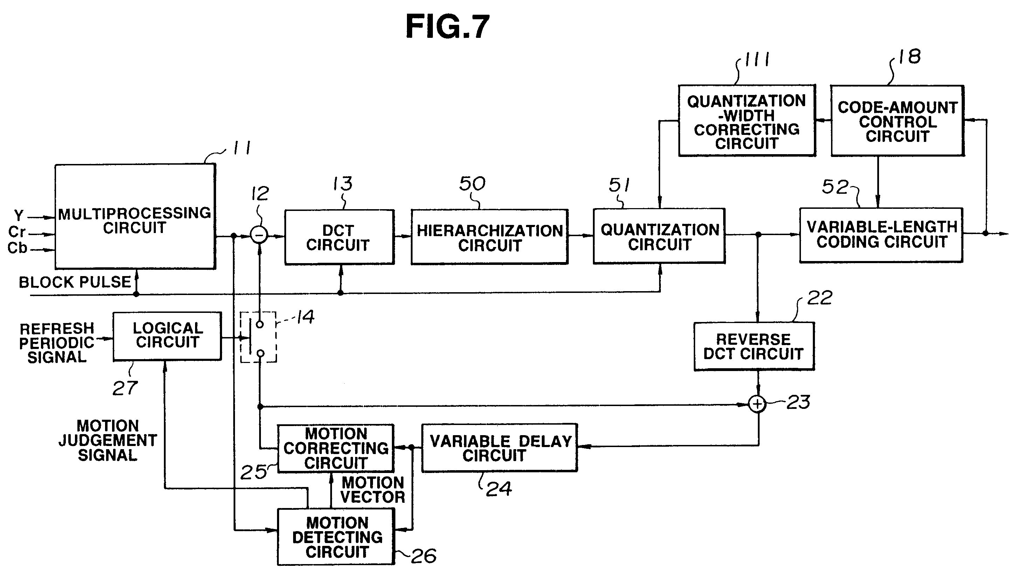

Fig. 7 is a block diagram showing an another embodiment of the invention. In Fig. 7, the same or identical reference numerals are applied to constitutional elements the same as or identical with those illustrated in Fig. 1, and the description thereof will be omitted. The present embodiment copes with a case where a relatively large code amount is allocated to a first layer, and a set code amount up to a lower layer subsequent to the first layer is relatively small.

A conversion coefficient from a DCT circuit 13 is given to a hierarchization circuit 50. The hierarchization circuit 50 is the same in arrangement as the hierarchization circuit in Fig. 13 and outputs the conversion coefficient in division into three (3) hierarchies including 2 x 2 of a low range, 4 x 4 of the low range and 8 x 8 of the total range. A quantization circuit 51 is the same in arrangement as the quantization circuit 51 in Fig. 14. The arrangement is such that the quantization coefficients of the quantization units 55, 58 and 62 (refer to Fig. 14) of the respective hierarchies are controlled by a quantization-width correcting circuit 111 to be described subsequently. The quantization circuit 51 outputs the quantization outputs q(2 x 2), q(4 x 4) and q(8 x 8) of the respective hierarchy 2 x 2, the hierarchy 4 x 4 and the hierarchy 8 x 8 and the reverse quantization outputs b(2 x 2), b(4 x 4) and b(8 x 8). The arrangement of a variable-length coding circuit 52 is also similar to that illustrated in Fig. 13. The variable-length coding circuit 52 performs decoding, in variable length, with respect to the quantization outputs of the respective hierarchies from the quantization circuit 51 to output the coding outputs of the respective hierarchies.

A coding output from the variable-length coding circuit 52 is given to a coding-amount control circuit 18. The code amount (generated code amount) of the coding output is counted every hierarchies to control the variable-length coding circuit 52 such that the total generated code amount does not exceed the set code amount. Further, the code-amount control circuit 18 decides the quantization width every hierarchies in accordance with the generated code amount of the respective hierarchies to output the same to the quantization-width correcting circuit 111.

The quantization-width correcting circuit 111 compares the quantization widths of the respective hierarchies given from the code-amount control circuit 18, with each other. In a case where the quantization width of a hierarchy on the side of the low range, of the two adjacent hierarchies is smaller than the quantization width of a hierarchy on the side of the high range equal to or more than a predetermined threshold value, the quantization-width correcting circuit 111 increases the quantization width of the hierarchy on the side of the low range without constant rating, to correct the quantization width such that a difference between the quantization width of the hierarchy on the side of the low range and the quantization width of the hierarchy on the side of the high range is contended within a predetermined threshold value. The quantization-width correcting circuit 111 gives the quantization coefficient on the basis of the corrected quantization width, to the quantization units 55, 58 and 62 of the quantization circuit 51 to control the quantization.

Operation of the embodiment arranged in this manner will next be described.

It is assumed that the set code amount up to the hierarchy 2 x 2 that is the first layer is so set as to have a large and sufficient room, and that a difference between the set code amount up to the hierarchy 4 x 4 and the set code amount up to the hierarchy 2 x 2 is relatively small. First, since the set code amount of the hierarchy 2 x 2 is large, the quantization width of the hierarchy 2 x 2 is small. The code amount of the quantization output q(2 x 2) from the quantization unit 55 is many. On the contrary, the code amount of the quantization output q(4 x 4) is small. Even in this case, since the set code amount in the hierarchy 2 x 2 is large, the code-amount control circuit 18 sets the small quantization width regarding the hierarchy 2 x 2, and sets the large quantization width regarding the hierarchy 4 x 4.

The quantization-width correcting circuit 111 detects that the quantization width of the hierarchy 4 x 4 is larger than the quantization width of the hierarchy 2 x 2 equal to or more than the predetermined threshold value, to correct the quantization width to a larger value without controlling, in rate, of the hierarchy 2 x 2 that is the hierarchy on the side of the low range. Then, the quantization coefficient of the quantization unit 55 increases, while the code amount of the coding output on the basis of the quantization output q(2 x 2) of the hierarchy 2 x 2 decreases. Specifically, the generated code amount up to the hierarchy 4 x 4 is reduced.

However, the code-amount control circuit 18 monitors the generated code amount of the coding output to decide the quantization width, and reduces the quantization width of the hierarchy 4 x 4 such that the generated code amount of the hierarchy 4 x 4 is not reduced less than the total set code amount in blocks subsequent to the block in which the quantization width is corrected. Thus, it is possible to increase the code amount which is used only in the hierarchy 4 x 4, only by the fact that the generated code amount up to the hierarchy 2 x 2 is reduced. It is possible to improve the image quality of the reproduced image on the basis of the hierarchy 4 x 4.

In this manner, in the present embodiment, the arrangement is such that the difference between the quantization widths of the respective hierarchies is monitored, and the quantization width is corrected such that the difference does not increase more than the predetermined threshold value. Thus, the proportion of the quantization errors of the respective hierarchies is equalized so that the image qualities of the reproduced images on the basis of the hierarchies can be equalized to each other.

In connection with the above, the arrangement may be such that not only the difference between the quantization width of the hierarchy 2 x 2 and the quantization width of the hierarchy 4 x 4 is so corrected as to be contended within the threshold value, but also the quantization width of the hierarchy 2 x 2 and the quantization width of the hierarchy 4 x 4 are so corrected as to become the same value.

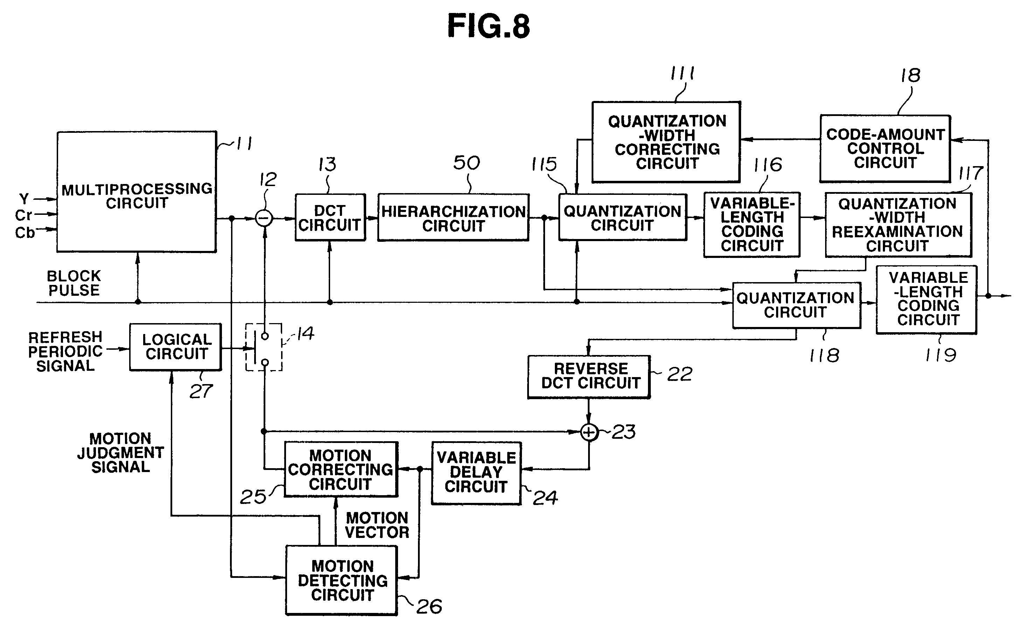

Fig. 8 is a block diagram showing an another embodiment of the invention. In Fig. 8, the same or identical reference numerals are applied to constitutional elements the same as or identical with those in Fig. 7, and the description thereof will be omitted.

The embodiment in Fig. 7 is arranged such that, regarding the hierarchy in which the code amount having a sufficient room is set, only the quantization width of the hierarchy is corrected. On the contrary, the present embodiment is arranged such that the quantization width of the hierarchy on the side of the high range is also corrected simultaneously with the hierarchy on the side of the low range, in consideration of decrease in the code amount of the hierarchy on the side of the high range which is generated by correction of the quantization width of the hierarchy on the side of the low range.

Conversion coefficients of respective hierarchies from a hierarchization circuit 50 are given to quantization circuits 115 and 118. The quantization circuits 115 and 118 are the same in arrangement as that in Fig. 14, and quantize the conversion coefficients every hierarchies to output the same to variable-length coding circuits 116 and 119. The quantization circuit 115 is such that the quantization widths of the respective hierarchies are set by an quantization-width correcting circuit 111, while the quantization circuit 118 is such that the quantization widths of the respective hierarchies are set by a quantization-width reexamining circuit 117 to be described subsequently. The arrangement is such that a reverse quantization output of the quantization circuit 118 is given to a reverse DCT circuit 22.

The variable-length coding circuit 116 codes, in variable length, the quantization outputs of the respective hierarchies from the quantization circuit 115 to output the coding output to the quantization-width reexamination circuit 117. The variable-length coding circuit 119 codes, in variable length, the quantization outputs of the respective hierarchies from the quantization circuit 118 to output the same. The output from the variable-length coding circuit 119 is given also to a code-amount control circuit 18.

In a case where the code amount up to the predetermined hierarchy other than the first layer is reduced less than the set code amount, the quantization-width reexamination circuit 117 reduces the quantization width of the hierarchy to cause the generated code amount up to the hierarchy to approach to the set code amount. The quantization circuit 118 is such that the quantization coefficient is corrected by the quantization-width reexamination circuit 117 to quantize the conversion coefficient from the hierarchization circuit 50. In this connection, the quantization circuit 118 performs quantization by the quantization width the same as that of the quantization circuit 115, regarding a hierarchy on the side of a lower region than the hierarchy in which the quantization width is corrected.

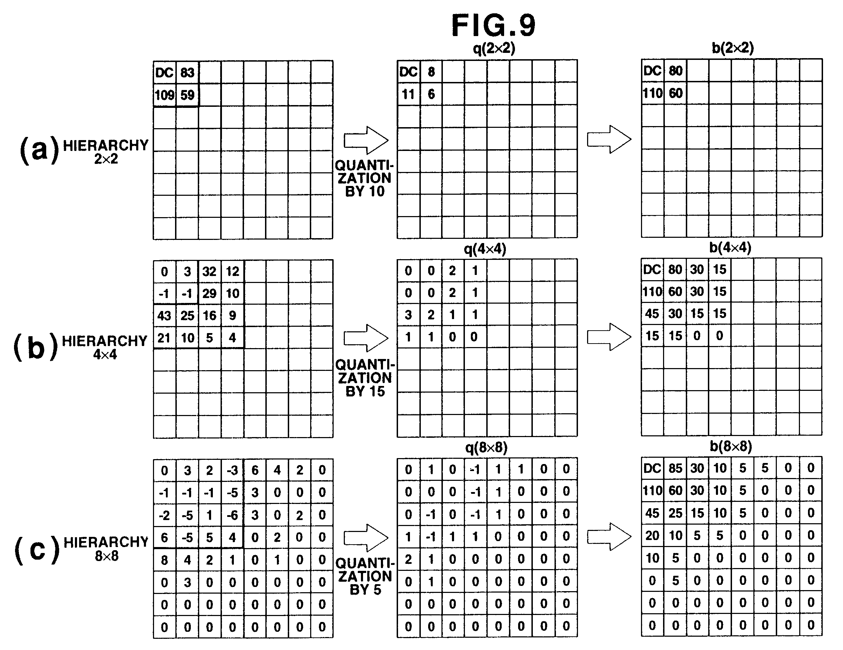

Operation of the embodiment arranged in this manner will next be described with reference to an explanatory view in Figs. 9(a) to 9(c). Figs. 9(a) to (c) correspond respectively to Figs. 21(a) to (c). It is assumed that, in Figs. 9(a) to 9(c), the quantization widths of the respective hierarchy 2 x 2, hierarchy 4 x 4 and hierarchy 8 x 8 are 10, 15 and 5, respectively.

It is assumed that the set code amount up to the hierarchy 2 x 2 that is the first layer is large and is a setting having a sufficient room, and a difference between the set code amount up to the hierarchy 4 x 4 and the set code amount up to the hierarchy 2 x 2 is relatively small. In this connection, the quantization-width correcting circuit 111 performs correction of the quantization width when a difference between the quantization width of the hierarchy on the low side and the quantization width of a lower layer thereof becomes a value equal to or larger than a predetermined threshold value.

Now, it is assumed that the conversion coefficient of a block subsequent to the predetermined block is one shown in Fig. 20. In the predetermined block, similarly to the embodiment in Fig. 7, since the set code amount of the hierarchy 2 x 2 is large or high, the quantization width of the hierarchy 2 x 2 is small or low, and the code amount of the quantization output q(2 x 2) is large or great. On the contrary, the code amount of the quantization output q(4 x 4) is small. Thus, the quantization width set by the code-amount control circuit 18 is assumed to become a difference greater or larger than the predetermined threshold value at the hierarchy 2 x 2 and the hierarchy 4 x 4. Then, the quantization-width correction circuit 111 increases the quantization width of the hierarchy 2 x 2 to quantize the conversion coefficient (Fig. 20) of the subsequent block.

For example, it is assumed that the conversion coefficient of the hierarchy 2 x 2 indicated on the left-hand column in Fig. 9(a) is quantized by ten (10). The quantization output q(2 x 2) in this case becomes one illustrated on the central column in Fig. 9(a). Specifically, the code which is coded, in variable length, up to the hierarchy 2 x 2 is DC, 8, 11 and 6. Specifically, as compared with the conventional example, power of the AC coefficient after quantization becomes extremely small, and becomes the code amount which is considerably or remarkably reduced less than the setting rate. The quantization circuit 115 performs quantization regarding also the following hierarchies 4 x 4 and 8 x 8, to output the quantization output to the variable-length coding circuit 116. The variable-length coding circuit 116 codes, in variable length, the quantization outputs of the respective hierarchies to output the coding outputs to the quantization-width reexamination circuit 117.

The quantization-width reexamination circuit 117 monitors the generated code amount of the coding outputs. In this case, since the quantization width of the hierarchy 2 x 2 increases by correction without performing rate control, the code amount which is generated up to the hierarchy 4 x 4 is lower or smaller than the set code amount. In view of this, the quantization-width reexamination circuit 117 gives a command or indication to the quantization circuit 118 so as to decrease the quantization width of the hierarchy 4 x 4. For example, it is assumed that fifteen (15) is set as the quantization width of the hierarchy 4 x 4. The quantization circuit 118 quantizes the hierarchy 2 x 2 by the quantization coefficient ten (10), while quantizes the hierarchy 4 x 4 by the quantization coefficient fifteen (15).

Thus, the quantization circuit 118 outputs the coefficient illustrated on the central column in Fig. 9(b) as the quantization output of the hierarchy 4 x 4. Specifically, the AC coefficient coded, in variable length, in the hierarchy 4 x 4 becomes {(0x3), 3}, {0, 2}, {1}, {2}, {2}, {1}, {1}, {1}, {1} and {1}.

Moreover, the quantization outputs q(8 x 8) in the hierarchy 8 x 8 becomes one shown in the central column in Fig. 9(c). The AC code which is coded, in variable length, in the hierarchy 8 x 8 is {0, 1}, {(0x4), 1}, {0, 1}, {1}, {2}, {- 1}, {0, - 1}, {1}, {1}, {1}, {- 1}, {1}, {1}, {(0x2), 1}, {0, 1} and {1}. As will be clear from comparison with the conventional example, since the power of the AC coefficient for coding is reduced, it is possible to shorten a code length.

In this manner, in the present embodiment, the quantization width is corrected, whereby the power of the AC coefficient can decrease, and the entropy can be reduced. It is possible to remarkably reduce the quantization error in the hierarchy 4 x 4 less than the conventional example, and it is possible to improve the image quality of the reproduced image on the basis of the hierarchy 4 x 4. Further, it is possible to equalize the quantization error to equalize the image qualities of the respective hierarchies.

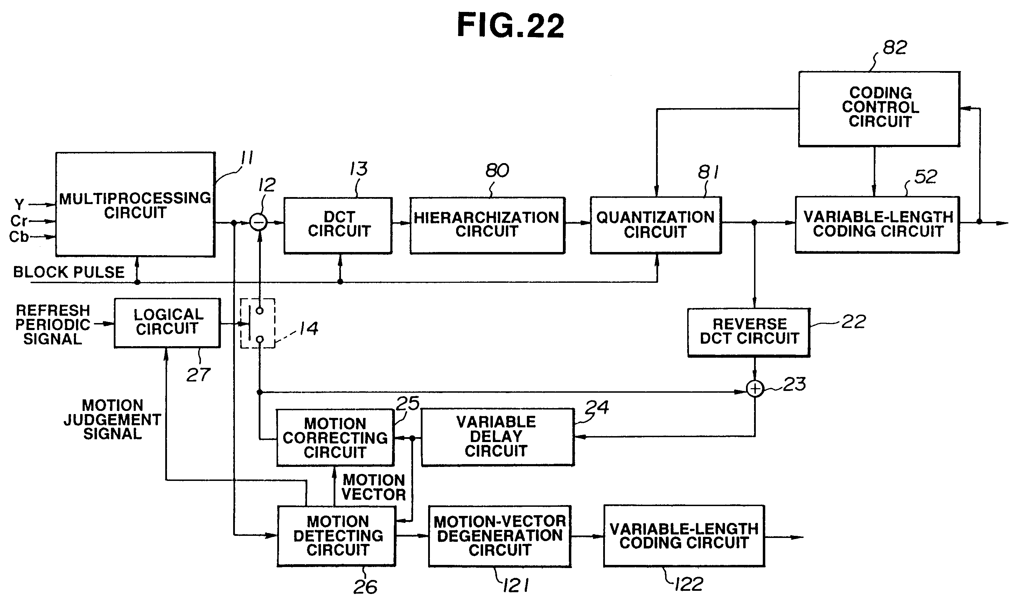

Fig. 22 is a block diagram showing an another embodiment of the invention. In Fig. 22, the same or identical reference numbers are applied to constitutional elements the same as or identical with those in Fig. 1, and the description thereof will be omitted. The present embodiment is so considered as to project or represent an image on the basis of the hierarchy 2 x 2 that is the first layer.

The present embodiment is different from the embodiment in Fig. 1 in that the present embodiment comprises a motion-vector degeneration circuit 121 and a variable-length coding circuit 122. A motion vector from a motion detecting circuit 26 is given to a motion correcting circuit 25, and is given also to the motion-vector degeneration circuit 121. The motion-vector degeneration circuit 121 is so arranged as to reduce the motion vector in accordance with the hierarchy. As described previously, if the coding output using only the low range of the conversion coefficient is decoded, the reproduced image becomes a reduced image. In a case where the reproduced image is used as it is and is displayed in small image plane, it is required that, when the coding output is compressed in inter-frame, the motion vector is reduced in accordance with the reduction ratio to perform motion correction. Meanwhile, if the reproduced image is displayed in total region of the image plane, that is, in dimension corresponding to the hierarchy 8 x 8, the displayed image is low in resolution. In this case, detailed information is not required as the motion vector. In view of this, in the present embodiment, the motion vector is reduced on the side of coding and is transmitted, whereby the coding efficiency is improved. In a case where the coding output of the upper layer is used to perform display in small image plane, the reduced motion vector is used as it is, while, in a case where display is performed in large image plane, the motion vector transmitted is enlarged and is used.

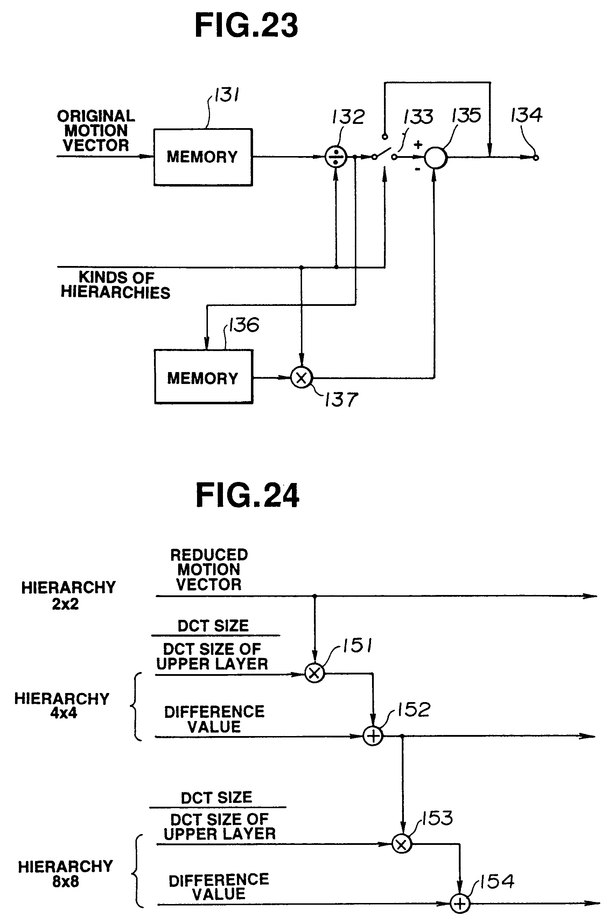

Fig. 23 is a block diagram showing a specific arrangement of the motion-vector degeneration circuit 121 in Fig. 22.

The original motion vector from the motion detecting circuit 26 is given to a memory 131. The memory 131 preserves the motion vector inputted at timing the first layer is coded, until coding of the subsequent layer is performed, to output the same to a divider 132. Kinds or types of the hierarchies are also inputted to the divider 132. The divider 132 divides the motion vector by a value in accordance with the type of the hierarchies, that is, a value in accordance with a ratio between the number of the conversion coefficients in the horizontal and vertical directions in the first layer (the hierarchy on the nearest side of the high range)(hereinafter referred to as "full DCT size") and the number of the conversion coefficients in the horizontal and vertical directions in the respective hierarchies (hereinafter referred to as "DCT size") to output the same to a switch 133 and a memory 136. For example, it is assumed that the hierarchies of coding are the hierarchy 2 x 2, the hierarchy 4 x 4 and the hierarchy 8 x 8. Then, the divider 132 performs division by (full DCT size/DCT size =) 8/2 = 4 at the hierarchy 2 x 2, and performs division by 8/4 = 2 at the hierarchy 4 x 4. Moreover, at the hierarchy 8 x 8, 8/8 = 1 so that division is not performed.

In the present embodiment, the image quality of the reproduced image on the basis of the coding output of the hierarchy on the side of the high range is considered to transmit the motion vector every the hierarchies. In this case, in order to reduce the coding amount, the motion vector is predicted in difference at the hierarchies other than the first layer and is outputted. Specifically, the switch 133 gives the output from the divider 132 to an output terminal 134 at the first layer, and gives the output from the divider 132 to a subtracter 135 other than the first layer. The memory 136 outputs the output from the divider 132 to a multiplier 137 upon coding of the subsequent hierarchy. The kinds of hierarchies are also given to the multiplier 137. The multiplier 137 multiplexes (DCT size of the DCT size of the present layer/the previous layer (the hierarchy on the side of the low range)) to an output from the memory 136 to find a prediction value, to thereby output the same to the subtracter 135. The subtracter 135 subtracts the prediction value from the reduced motion vector from the divider 132 to output the difference therebetween to the output terminal 134.

The reduced motion vector is given to the variable-length coding circuit 122 through the output terminal 134. The variable-length coding circuit 122 codes, in variable length, the reduced motion vector to output the same.

Fig. 24 is a block diagram showing a motion-vector reproducing circuit which is used in the motion-vector extracting circuit (refer to Fig. 5) on the side of decoding. In this connection, Fig. 24 shows a circuit in a case where the small-image-plane display is performed.

The motion vector of the hierarchy 2 x 2 is used as it is. The coding outputs of the motion vectors of the hierarchy 2 x 2, the hierarchy 4 x 4 and the hierarchy 8 x 8 are given respectively to a multiplier 151, and adders 152 and 154. (DCT size/DCT size of the hierarchy on the side of the low range =) 4/2 = 2 is also given to the multiplier 141. 2 is multiplied to the motion vector of the hierarchy 2 x 2 to find a prediction value to thereby output the same to the adder 152. The adder 152 adds the coding output (difference value) of the motion vector of the transmitted hierarchy 4 x 4 and the prediction value to each other to reproduce the motion vector of the hierarchy 4 x 4, to thereby output the same.

The output from the adder 152 is given also to a multiplier 153. (DCT size/DCT size of the hierarchy on the side of the low range =) 8/4 = 2 is also given to the multiplier 153. 2 is multiplied to the motion vector of the hierarchy 4 x 4 to find the prediction value, to thereby output the same to the adder 154. The adder 154 adds the coding output (difference value) of the transmitted motion vector of the hierarchy 8 x 8 and the prediction value to each other to reproduce the original motion vector of the hierarchy 8 x 8, to thereby output the same.

Operation of the embodiment arranged in this manner will next be described.

The motion vector from the motion detecting circuit 26 is given to the motion-vector degeneration circuit 121 and is reduced by a reduction ratio which is in accordance with the layer. Now, it is assumed that dimension or size of the motion vector from the motion detecting circuit 26 is ten (10). The memory 131 preserves the motion vector which is inputted upon coding of the hierarchy 2 x 2 that is the first layer, till the time of coding of the hierarchy 4 x 4 of the subsequent layer, to give the same to the divider 132.

In the hierarchy 2 x 2, the divider 132 divides the motion vector by (full DCT size/DCT size =) 8/2 = 4 to output the same. In this connection, for convenience of description, the division result of the divider 132 is shown in half-adjustment. Specifically, 10/4 → 3 (→ indicates a value in which a quotient is half-adjusted at equal to or less than a decimal point) is outputted from the divider 132. The switch 133 outputs the output from the divider 132 to the output terminal 134 as it is upon coding of the first layer. This motion vector is processed, in PCM, by a difference with respect to the adjacent block, for example, and is given to the variable-length coding circuit 122. Moreover, the motion vector ("3") of the hierarchy 2 x 2 from the divider 132 is given also to the memory 136 and is stored.

In the hierarchy 4 x 4, the motion vector ("10") from the memory 131 is divided by (full DCT size/DCT size =) 8/4 = 2 at the divider 132. The divider 132 outputs 10/2 → 5 to the switch 133. At layers other than the first layer, the switch 133 gives the output from the divider 132 to the subtracter 135. Meanwhile, the multiplier 137 reads out the motion vector ("3") of the hierarchy 2 x 2 that is the hierarchy on the side of the low range, from the memory 136 to multiply (DCT size/DCT size of the hierarchy on the side of the low range (the hierarchy 2 x 2) =) 4/2 = 2, to thereby find a prediction value. The multiplier 137 gives the found prediction value (3 x 2 = 6) to the subtracter 135. The subtracter 135 subtracts the prediction value from the motion vector of the hierarchy 4 x 4 from the divider 132 to output a difference therebetween. - 1 (= 5 - 6) is outputted from the subtracter 135.

In the hierarchy 8 x 8, the motion vector ("10") is given to the subtracter 135 as it is through the divider 132 and the switch 133. The multiplier 137 multiplies (DCT size/DCT size of the hierarchy on the side of the low range (the hierarchy 4 x 4)) = 8/4 = 2 to the output (reduced vector value "5") from the divider 132 of the hierarchy 4 x 4 which is read out from the memory 136, to find a prediction value. The subtracter 135 subtracts the prediction value (5 x 2 = 10) from the motion vector ("10") to output the same. Specifically, the subtracter 135 outputs a difference 0 (zero) (= 10 - 10).

In this manner, conventionally, the motion vector ("10") is transmitted in the hierarchy 2 x 2, whereas, in the present embodiment, the motion vector ("3") reduced should be transmitted up to the hierarchy 2 x 2. Thus, it is possible to reduce the code amount. Furthermore, regarding the hierarchy 4 x 4 and the hierarchy 8 x 8, only a difference value is transmitted. Since hierarchization is performed at the hierarchy 2 x 2, the hierarchy 4 x 4 and the hierarchy 8 x 8, the difference value regarding the hierarchy 4 x 4 and the hierarchy 8 x 8 is any of 0, 1 and -1. It is possible to reduce an increase in the code amount.

The output from the motion-vector degeneration circuit 121 is given to the variable-length coding circuit 122. Since the difference value of the hierarchy 4 x 4 and the hierarchy 8 x 8 is any one of three (3) kinds including 0, 1 and -1, the variable-length coding circuit 122 allocates the variable-length codes illustrated in the below table 2, for example, whereby it is possible to perform coding of high efficiency.

**Table 2**

| Difference | Code |
|---|---|
| 0 | 0 |
| 1 | 10 |
| -1 | 11 |

Operation on the side of decoding will next be described.

It is assumed that small-image-plane display is performed which uses the coding output of the hierarchy 2 x 2. In this case, since the motion vector is reduced in accordance with the DCT size on the coding side, the transmitted reduced motion vector ("3") should be used as it is.

It is assumed that small-image-plane display is performed which uses the coding output of the hierarchy 4 x 4. The reduced motion vector of the hierarchy 2 x 2 is given to the multiplier 151 which performs multiplication such as (DCT size/DCT size of the hierarchy on the side of the low range (the hierarchy 2 x 2)) = 4/2 = 2 to restore a prediction value (3 x 2 = 6). The adder 152 adds the transmitted difference value of the hierarchy 4 x 4 and the prediction value to each other to find the reduced motion vector (6 + (- 1) = 5) of the hierarchy 4 x 4.

In a case where the coding output of the hierarchy 8 x 8 is used to perform display over the entire region of the image plane, the output from the adder 154 is used. The multiplier 153 multiplies (DCT size/DCT size of the hierarchy on the side of the low range (the hierarchy 4 x 4) =) 8/4 = 2 to the reduced motion vector ("5") of the hierarchy 4 x 4, to restore the prediction value (5 x 2 = 10), to thereby give the same to the adder 154. The adder 154 adds the difference value ("0") of the transmitted hierarchy 8 x 8 and the prediction value ("10") to each other to reproduce the motion vector ("10"), to thereby output the same.

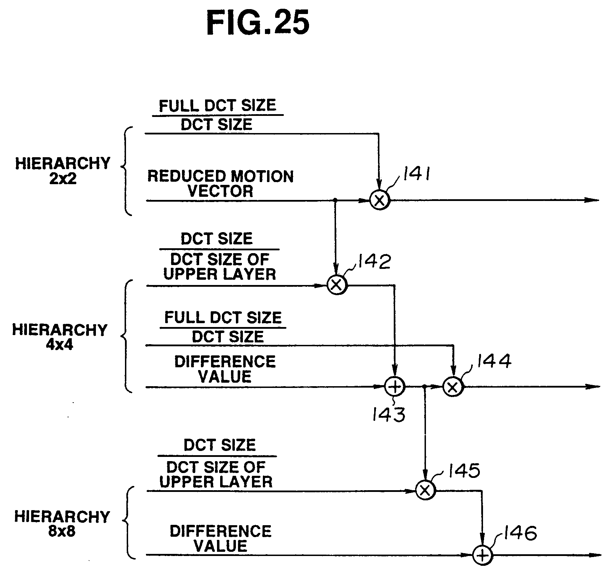

Fig. 25 is a block diagram showing the motion-vector reproducing circuit in a case where the large-image-plane display is performed.

The reduced motion vector of the hierarchy 2 x 2, the hierarchy 4 x 4 and the hierarchy 8 x 8 and the difference value are given respectively to a multiplier 141 and adders 143 and 146. (full DCT size/DCT size =) 8/2 = 4 is also given to the multiplier 141. 4 is multiplied to the reduced motion vector of the transmitted hierarchy 2 x 2 to reproduce the original motion vector. The reduced motion vector of the hierarchy 2 x 2 is also given to a multiplier 142. (DCT size/DCT size of the upper layer =) 4/2 = 2 is also given to the multiplier 142. 2 is multiplied to the reduced motion vector of the hierarchy 2 x 2 to restore the prediction value, to thereby give the same to the adder 143. The adder 143 adds the prediction value to the difference value of the transmitted hierarchy 4 x 4 to find the reduced motion vector of the hierarchy 4 x 4, to thereby output the same to multipliers 144 and 145. (full DCT size/DCT size =) 8/4 = 2 is also given to the multiplier 144. 2 is multiplied to the reduced motion vector of the hierarchy 4 x 4 to reproduce the original motion vector.

(DCT size/DCT size of the hierarchy on the side of the low range =) 8/4 = 2 is also given to the multiplier 145. 2 is multiplied to the reduced motion vector of the hierarchy 4 x 4 to find a prediction value, to thereby output the same to the adder 146. The adder 146 adds the difference value of the transmitted hierarchy 8 x 8 and the prediction value to each other to reproduce the original motion vector.

Reproducing operation of the motion vector in a case where large image-plane display is performed will next be described.

It is assumed that the large image-plane display is performed over the entire region by the use of the coding output of the hierarchy 2 x 2. In this case, the multiplier 141 multiplies (full DCT size/DCT size =) 8/2 = 4 to the transmitted reduced motion vector ("3") and outputs the multiplication result (3 x 4 = 12) as a reproduced output of the motion vector.

The reduced motion vector of the hierarchy 2 x 2 is also given to the multiplier 142. The multiplier 142 multiplies (DCT size/DCT size of the hierarchy on the side of the low range (the hierarchy 2 x 2) =) 4/2 = 2 to the motion vector ("3") of the hierarchy 2 x 2 to reproduce the prediction value (3 x 2 = 6). The adder 143 adds the difference value (- 1) of the transmitted hierarchy 4 x 4 and the prediction value (6) to each other to reproduce the reduced motion vector (6 + (- 1) = 5) of the hierarchy 4 x 4. Further, the multiplier 144 multiplies (full DCT size/DCT size =) 8/4 = 2 to the reduced motion vector ("5") to reproduce the original motion vector. In this manner, in a case where the coding output of the hierarchy 4 x 4 is used to perform the large image-plane display, the output ("10") from the multiplier 144 is used as the motion vector.

In a case where the large image-plane display is performed by the use of the coding output of the hierarchy 8 x 8, the output from the adder 146 is used as the motion vector. The multiplier 145 multiplies (DCT size/DCT size of the hierarchy on the side of the low range (the hierarchy 4 x 4) =) 8/4 = 2 to the reduced motion vector of the reproduced hierarchy 4 x 4 to find the prediction value (5 x 2 = 10), to thereby give the same to the adder 146. The adder 146 adds the prediction value ("10") to the difference value ("0") of the transmitted hierarchy 8 x 8, to output the addition result (10 + 0 = 10) as the motion vector.

Regarding the inter frame, the motion vector which is reproduced by the circuit in Fig. 24 or Fig. 25 is used to perform motion correction.

In this manner, in the present embodiment, the motion vector is reduced and is transmitted in accordance with the DCT sizes of the respective hierarchies. Thus, it is possible to reduce the code amount of the first layer.

In the present invention, it is apparent that different working modes can be arranged in a broad scope on the basis of the present invention without departure of the spirit and scope of the invention. The invention is not limited or restricted by specific working modes thereof except being limited by appended claims.

## Claims

1. A coding apparatus for hierarchizing a digital signal to code the same, characterized by comprising:
orthogonal transformation means for orthogonally transforming a digital signal to output a conversion coefficient having a direct-current component and a plurality of alternate-current components; (13)
hierarchization means for hierarchizing the conversion coefficient from said orthogonal transformation means into a plurality of hierarchies in accordance with a frequency of said conversion coefficient to successively output the hierarchized conversion coefficient from a first layer corresponding to a low-range component toward an nth layer (n is the integer equal to or more than 2) corresponding to a high-range component; (80)
transmission means for controlling, in rate, the conversion coefficients of the respective hierarchies from said hierarchization means to transmit the conversion coefficients; and (81, 82)
rate adjusting means for inhibiting the rate control of said transmission means to control rates of the respective hierarchies on the basis of powers of the respective hierarchies. (80)

2. A coding apparatus according to claim 1, characterized in that said rate adjusting means reduces the rate of said first layer less than the rate due to control of said transmission means.

3. A coding apparatus according to claim 1, characterized in that said rate adjusting means judges the powers of the respective hierarchies by a code amount in a case where the conversion coefficients of the respective hierarchies are coded.

4. A coding apparatus according to claim 3, characterized in that said rate adjusting means reduces the rate of said first layer by said coding due to the rate control of said transmitting means.

5. A coding apparatus according to claim 1, characterized in that said rate adjusting means includes rate non-control means for inhibiting transmission of the conversion coefficient of said alternate-current component regarding a conversion coefficient of said first layer of the conversion coefficients of the respective hierarchies which are outputted from said hierarchization means to said transmission means, to halt the rate control of the first layer due to said transmission means.

6. A coding apparatus for hierarchizing a digital signal to code the same, characterized by comprising:
orthogonal transformation means for orthogonally transforming a digital signal to output a conversion coefficient having a direct-current component and a plurality of alternate-current components; (13)
hierarchization means for hierarchizing the conversion coefficient from said orthogonal transformation means into a plurality of hierarchies in accordance with a frequency of said conversion coefficient to successively output the hierarchized conversion coefficient from a first layer corresponding to a low-range component toward an nth layer (n is the integer equal to or more than 2) corresponding to a high-range component; (80)
quantization means for quantizing the conversion coefficients of the respective hierarchies to output a quantization output; (81)
variable-length coding means for converting said quantization output to variable-length codes every hierarchies; (52)
rate control means for monitoring an output code amount of said variable-length coding means to control a quantization coefficient of said quantization means every hierarchies, to thereby perform rate control every hierarchies; and (82)
rate adjusting means including rate non-control means for inhibiting transmission of the conversion coefficients of said alternate-current components, regarding the conversion coefficient of said first layer, of the conversion coefficients of the respective hierarchies outputted from said hierarchization means to said quantization means. (80)

7. A coding apparatus according to claim 6, characterized in that said rate adjusting means includes quantization-width correcting means for correcting a quantization width of said predetermined hierarchy so as to be within a predetermined threshold value in a case where a quantization width of a predetermined hierarchy of quantization widths set by said rate control means is smaller than the quantization width of a lower layer therebelow equal to or less than said threshold value, to increase the same.

8. A coding apparatus according to claim 7, characterized in that said rate adjusting means includes quantization-width reexamination means for monitoring an output from said variable-length coding means in a case where a quantization width corrected by said quantization-width correcting means is used, to correct so as to reduce the quantization width of a hierarchy below the predetermined hierarchy in which said quantization width is corrected on the basis of a monitoring result, to thereby again quantize the same.

9. A coding apparatus for hierarchizing an image signal to code the same, characterized by comprising:
motion detecting means for detecting motion of an image from an inputted image signal, to output a motion vector; (26)
orthogonal transformation means for orthogonally transforming said image signal to output a conversion coefficient having a direct-current component and a plurality of alternate-current components; (13)
hierarchization means for hierarchizing the conversion coefficient from said orthogonal transformation means into a plurality of hierarchies in accordance with a frequency of said conversion coefficient to successively output the hierarchized conversion coefficient from a first layer corresponding to a low-range component toward an nth layer (n is the integer equal to or more than 2) corresponding to a high-range component; (80)
quantization means for quantizing the conversion coefficients of the respective hierarchies to output a quantization output; (81)
reference-image creating means for reversely quantizing said quantization output to reversely orthogonally converting the same, to thereby produce a reference image; (81), (22)
prediction means for correcting, in motion, said reference image by the use of said motion vector to find a difference between said reference signal and an image signal, to thereby give a found difference to said orthogonal transmission means to predict and code the same; (25), (12)
rate control means for monitoring a code amount of the prediction coding output due to said prediction means to control the quantization coefficient of said quantization means every hierarchies, to thereby perform rate control every hierarchies; and (82)
rate adjusting means for predictively coding only the code of said motion vector and said direct-current component regarding said first layer by said coding due to rate control of said transmission means on the basis of a code amount of prediction coding outputs of the respective hierarchies. (80)

10. A coding apparatus for hierarchizing an image signal to code the same, characterized by comprising:
motion detecting means for detecting motion of an image from an inputted image signal, to output a motion vector; (26)
orthogonal transformation means for orthogonally transforming said image signal to output a conversion coefficient having a direct-current component and a plurality of alternate-current components; (13)
hierarchization means for hierarchizing the conversion coefficient from said orthogonal transformation means into a plurality of hierarchies in accordance with a frequency of said conversion coefficient to successively output the hierarchized conversion coefficient from a first layer corresponding to a low-range component toward an nth layer (n is the integer equal to or more than 2) corresponding to a high-range component; (80)
quantization means for quantizing the conversion coefficients of the respective hierarchies to output a quantization output; (81)
reference-image creating means for reversely quantizing said quantization output to reversely orthogonally converting the same, to thereby produce a reference image; (81), (22)
prediction means for correcting, in motion, said reference image by the use of said motion vector to find a difference between said image signal and said reference image, to thereby give a found difference to said orthogonal transmission means to predict and code the same; and (25), (12)
motion-vector reducing means for reducing said motion vector every hierarchies on the basis of a ratio between the number of conversion coefficients of said nth layer and the number of the conversion coefficient of each of said hierarchies, to find a reduced motion vector, to thereby code the found reduced motion vector to output the same together with a quantization output of each of said hierarchies. (121)

11. A coding apparatus according to claim 10, characterized in that the reduced motion vector of each of the layers subsequent to a first layer performs prediction by the use of the reduced motion vector of an upper layer and a ratio of number between the number of conversion coefficients of the upper layer, and the number of conversion coefficients of a hierarchy which is coded at present to code, in difference, the same.

12. A coding apparatus according to claim 11, characterized by including rate adjusting means for coding, in prediction, only the reduced motion vector and said direct-current component regarding the first layer.

13. A coding apparatus for hierarchizing an image signal to code the same, characterized by comprising:
motion detecting means for detecting motion of an image from an inputted image signal, to output a motion vector; (26)
orthogonal transformation means for orthogonally transforming said image signal to output a conversion coefficient having a direct-current component and a plurality of alternate-current components; (13)
hierarchization means for hierarchizing the conversion coefficient from said orthogonal transformation means into a plurality of hierarchies in accordance with a frequency of said conversion coefficient to successively output the hierarchized conversion coefficient from a first layer corresponding to a low-range component toward an nth layer (n is the integer equal to or more than 2) corresponding to a high-range component; (80)
quantization means for quantizing the conversion coefficients of the respective hierarchies to output a quantization output; (81)
reference-image creating means for reversely quantizing said quantization output to reversely orthogonally converting the same, to thereby produce a reference image; (81), (22)
prediction means for correcting, in motion, said reference signal by the use of said motion vector to find a difference between said reference signal and said image signal, to thereby give a found difference to said orthogonal transmission means to predict and code the same; (25), (12)
means-value computing means for finding a mean of a dimension of said motion vector; (83)
rate adjusting means for comparing a mean value of the dimension of said motion vector with a predetermined threshold value, to code, in prediction, only the code of said motion vector and said direct-current component regarding the first layer corresponding to said low-range component in a case where mean magnitude of the motion vector is larger than said threshold value. (84), (80)
